(19) Europäisches Patentamt
European Patent Office
Office européen des brevets

(11) EP 2 262 728 B1

(12) **FASCICULE DE BREVET EUROPEEN**

(45) Date de publication et mention de la délivrance du brevet:
**25.06.2014 Bulletin 2014/26**

(21) Numéro de dépôt: **09728367.5**

(22) Date de dépôt: **19.03.2009**

(51) Int Cl.:
***C01B 33/00*** *(2006.01)* ***C07F 7/18*** *(2006.01)*
***C08J 5/22*** *(2006.01)* ***C08K 5/5419*** *(2006.01)*
***H01M 8/10*** *(2006.01)*

(86) Numéro de dépôt international:
**PCT/FR2009/000288**

(87) Numéro de publication internationale:
**WO 2009/122043 (08.10.2009 Gazette 2009/41)**

(54) **PRECURSEUR HYBRIDE SULFONE, SON PROCEDE DE SYNTHESE ET SES UTILISATIONS**

SULFONHYBRIDVORLÄUFER, VERFAHREN ZU SEINER SYNTHETISIERUNG UND VERWENDUNGEN DAFÜR

SULFONE HYBRID PRECURSOR, METHOD OF SYNTHESIZING SAME, AND USES THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.03.2008 FR 0801508**

(43) Date de publication de la demande:
**22.12.2010 Bulletin 2010/51**

(73) Titulaire: **Centre National de la Recherche Scientifique**
**75016 Paris (FR)**

(72) Inventeurs:
- **BARBOIU, Mihail-Dumitru**
**F-34080 Montpellier (FR)**
- **MICHAU, Mathieu**
**F-66300 Ponteilla (FR)**

(74) Mandataire: **Mena, Sandra et al**
**Cabinet Orès**
**36, rue de St Pétersbourg**
**75008 Paris (FR)**

(56) Documents cités:
**US-A1- 2005 164 063**

- **LINDNER E ET AL: "Supported organometallic complexes - Part XXX. Hydroformylation of 1-hexene in interphases-the influence of different kinds of inorganic-organic hybrid co-condensation agents on the catalytic activity" JOURNAL OF ORGANOMETALLIC CHEMISTRY, ELSEVIER-SEQUOIA S.A. LAUSANNE, CH, vol. 641, no. 1-2, 4 janvier 2002 (2002-01-04), pages 165-172, XP004326734 ISSN: 0022-328X**
- **SUNG, PO-HOU ET AL: "Novel Thermally Stable Cross-Linked Nonlinear Optical Silica Films Prepared by a Sol-Gel Process" CHEMISTRY OF MATERIALS , 10(6), 1642-1646 CODEN: CMATEX; ISSN: 0897-4756, 1998, XP002497202**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 262 728 B1

Printed by Jouve, 75001 PARIS (FR)

## Description

La présente invention est relative à un nouveau précurseur hybride sulfoné, à son procédé de synthèse ainsi qu'à ses utilisations, notamment pour la préparation de membranes électrolytes échangeuses de protons, comme charge hybride fonctionnelle dans une structure hôte après polymérisation sol-gel *in situ,* pour la fabrication par polymérisation sol-gel de nanoparticules hybrides fonctionnelles, à titre d'agent fluidifiant (par exemple pour diminuer la viscosité de pâtes concentrées telles que des céramiques et des barbotines), pour la réalisation de revêtements de surface par greffage chimique au travers d'une polymérisation sol-gel (formation d'une monocouche greffée augmentant l'hydrophilie de surface) comme agent hygroscopique, comme agent liant ou comme agent structurant.

L'invention qui va être décrite ci-après s'inscrit notamment dans le contexte de la production et de la gestion d'énergie. De nos jours, la production et la consommation d'énergie reposent majoritairement sur la combustion des ressources fossiles, ce qui est prévu pour avoir à terme un impact majeur sur l'économie mondiale et un effet défavorable sur l'environnement et l'écologie de la planète (carences de combustibles fossiles et pollutions atmosphériques croissantes). C'est pourquoi la conversion d'énergie de manière électrochimique à l'aide de piles à combustible est sérieusement considérée comme une source d'énergie et de puissance alternative (vecteur d'énergie).

Les piles à combustible à membrane échangeuse de protons, connues aussi sous le nom de piles à combustible à membrane électrolyte polymère (ou PEMFC selon l'acronyme des expressions anglaises "*Proton Exchange Membrane Fuel Cells*" ou "*Polymer Electrolyte Membrane Fuel Cells*") sont un type de piles à combustible développées pour des applications dans les transports aussi bien que pour des applications portables. Le principe des piles à combustible a été démontré expérimentalement en 1839 par l'électrochimiste britannique Sir William Grove. Les premières piles à combustible de type PEMFC furent développées aux Etats-Unis à partir des années 1960 par General Electric pour des applications spatiales. Actuellement, ce type de piles, prévues pour fonctionner à des températures intermédiaires (40-120°C), est internationalement développé par les industries de l'automobile et de l'électronique portable. Mais en dépit d'avantages environnementaux indéniables, et de rendements énergétiques supérieurs, les piles à combustible commencent juste à entrer en compétition avec les moteurs à explosion à cause de coûts encore importants (matières premières, durées de vie).

Le coeur d'une pile à combustible de type PEMFC est composé d'une membrane électrolyte polymère, d'électrodes (anode et cathode, le plus souvent sous la forme de fines couches de platine) et de plaques bipolaires servant à la diffusion gazeuse.

Les piles à combustible fonctionnant avec des membranes électrolytes polymères échangeuses de protons permettent de convertir l'énergie chimique de gaz ($H_2/O_2$) en énergie électrique avec de hauts rendements énergétiques et sans aucun rejet de polluant, selon les équations suivantes :

Réaction à la cathode (siège de la réduction de l'oxygène) :

$$\frac{1}{2} O_2 + 2 H^+ + 2 e^- \rightarrow H_2O$$

Réaction à l'anode (siège de l'oxydation de l'hydrogène) :

$$H_2 \rightarrow 2H^+ + 2 e^-$$

Les deux électrodes étant séparées par l'électrolyte (membrane), à l'anode on amène le combustible à oxyder (hydrogène), et la cathode est alimentée en oxygène (ou plus simplement en air, enrichi ou non en oxygène). A l'anode, le dihydrogène réagit et libère 2 électrons (oxydation) qui alimentent un circuit électrique extérieur reliant l'anode et la cathode. A la cathode, on assiste à la réduction cathodique de l'oxygène. Les réactifs sont en principe introduits en continu dans le dispositif et la force électromotrice de la pile est égale à la différence des potentiels d'électrodes. Ainsi, on obtient une réaction globale universellement connue :

$$H_2 + \frac{1}{2} O_2 \rightarrow H_2O$$

De l'eau est donc produite par le fonctionnement normal de la pile qui doit être évacuée à l'extérieur de la membrane. La gestion de l'eau est cruciale pour les performances de la pile ; il convient de veiller à ce que la quantité en eau reste constamment à un niveau optimum garantissant le bon fonctionnement de la pile. En particulier, un excès d'eau conduit à un gonflement excessif de la membrane, à un engorgement des canaux de distribution ou des électrodes et a un effet négatif sur l'accès des gaz aux sites catalytiques, alors qu'une quantité d'eau insuffisante conduit à un assèchement de la membrane, ce qui nuit à sa conductivité et au rendement de la pile.

Le rôle de la membrane est donc d'assurer le transport des protons ($H^+$) de l'anode vers la cathode et permettre

ainsi la réaction électrochimique. Elle ne doit cependant pas conduire les électrons ce qui créerait un court-circuit dans la pile à combustible. La membrane doit être résistante à l'environnement réducteur à l'anode et, en même temps, à un environnement oxydant à la cathode mais également empêcher le mélange de l'hydrogène contenu à l'anode avec l'oxygène contenu à la cathode.

Un des premiers polymères transporteurs protoniques qui a été utilisé pour la réalisation de telles membranes, et qui reste aujourd'hui la référence dans ce domaine, est le Nafion®, un polymère perfluorosulfonique développé et mis au point en 1968 par la firme américaine Du Pont de Nemours. Historiquement, les programmes spatiaux Gemini de la NASA dans les années 60 utilisaient des piles à combustible comportant des membranes de type polystyrène sulfoné mais très vite elles furent supplantées par les membranes Nafion® qui ont permis d'améliorer la performance des PEMFC. Sur le plan chimique, il s'agit d'un polymère organique, constitué d'une chaîne fluorocarbonée flexible sur laquelle sont distribués de façon statistique des groupements ioniques (Mauritz K. A. et al., Chem Rev., 2004, 104, 4535-4585). Sur le principe du Nafion®, il existe également d'autres polymères commerciaux perfluorosulfoniques tels que ceux vendus sous les dénominations commerciales Aciplex® (Asahi Chemical Company, Japon) ou Flemion® (Asahi Glass Company, Japon).

Les membranes fabriquées à partir de ces polymères sont par nature très stables chimiquement, thermiquement et mécaniquement (flexibilité). Elles présentent de bonnes propriétés électrochimiques avec une conductivité élevée, de l'ordre de 0,1 $S.cm^{-1}$ à température ambiante et 100 % d'humidité relative (selon les données du fabricant pour le Nafion®). Toutefois, ces membranes doivent fonctionner à une température inférieure à 90°C et doivent toujours rester saturées en eau pour permettre un déplacement efficace des ions $H^+$. En effet, la conduction des protons se fait principalement par un mécanisme de type Grotthus, c'est-à-dire par sauts de protons le long des chemins de conduction ioniques et hydrophiles (Mauritz K. A. *et al., 2004,* pré-cité). Par ailleurs, la synthèse de ces membranes est longue, délicate, voire dangereuse compte tenu de l'utilisation de fluor, ce qui justifie en partie leur coût de revient très élevé. Elles ne donnent pas non plus entière satisfaction en ce qui concerne les problèmes liés à la gestion de l'eau et aux changements de température. En effet, lorsque le système subit de nombreuses variations du taux d'humidité, on note une apparition de cycles successifs de gonflement et de restructuration de la membrane entraînant une fatigue importante. Par ailleurs, le Nafion ® est un polymère qui subit tout naturellement une transition vitreuse (Tg = 120°C) ce qui contribue à son vieillissement accéléré et à l'apparition de réorganisations structurales et de faiblesses mécaniques (ruptures) limitant ainsi sa durée de vie.

D'autres types de polymères alternatifs utilisables pour la préparation de membranes électrolytes ont également déjà été proposés. Il s'agit en particulier de polymères thermostables sulfonés ou dopés (polyaryléthercétones sulfonés, polybenzymidazoles, polyarylethersulfones, etc ...). Ces polymères conduisent à des membranes présentant aussi certains inconvénients, notamment en terme de conductivité (performance), de durée de vie et de gestion de l'eau.

C'est pourquoi, pour palier aux faiblesses respectives de chacun de ces systèmes, de nombreux travaux de modification par incorporation de phases inorganiques ont été effectués ces dernières années, ce qui a entraîné une amélioration globale des propriétés des PEMFC. Cela se traduit en particulier au niveau de la gestion de l'eau ainsi qu'au niveau du comportement des matériaux à haute température (déshydratation) et de leur stabilité à long terme. Ces concepts se sont généralisés avec l'apparition des membranes hybrides qui ont également permis de mettre en évidence l'importance de la présence d'un réseau continu inorganique au sein de l'électrolyte conducteur.

US 2005/0164063 décrit ainsi des produits sulfonés dépourvus de groupement urée adaptés aux polymérisations sol-gel pour la préparation de membranes polymères électrolytes conductrices de protons pour piles à combustibles.

Des complexes monomériques à base de rhodium obtenus par réaction du (p-aminophényl)diphénylphosphine avec du 3-isocyanatopropyl-triéthoxysilane, présentant des propriétés catalytiques améliorées, sont également connus et utilisés pour des polymérisations sol-gel (J. Organomet. Chem., 2002, 641, 165-172).

Des films préparés par réaction d'un alkoxysilane avec du 4-[(4"-aminophényl)sulfonyl]-4'-[N, N'-bis(2-hydroxyéthyl)amino]azobenzène, par polymérisation sol-gel sont également décrits dans Chem. Mater., 1998, 10, 1642-1646, pour leurs applications dans le domaine de l'optique.

Malheureusement, à l'heure actuelle, aucune membrane, quelle que soit sa nature, ne satisfait pleinement aux exigences drastiques des constructeurs et utilisateurs de PEMFC. Bien que beaucoup de dispositifs techniques opérationnels utilisant ces systèmes électrochimiques soient apparus sur le marché, tels que par exemple la pile à combustible GENEPAC qui est issue d'un partenariat entre PSA Peugeot Citroën et le Commissariat à l'Energie Atomique, et dont la puissance peut aller jusqu'à 80 KW, il subsiste encore des verrous technologiques à lever.

En terme de gestion de l'eau tout d'abord : comme on l'a vu précédemment, il est primordial de gérer l'eau produite pendant le fonctionnement de la pile et son influence sur les propriétés de la membrane électrolyte (notamment la conductivité). Cette nécessité de contrôler et gérer au mieux les transports d'eau se produisant dans une PEMFC (entrées, sorties, génération, et rétro-diffusion entre cathode et anode) demeure une contrainte très importante qui encourage la réalisation d'électrolytes moins dépendants de l'humidité relative.

En terme de température de fonctionnement également : les piles à combustible de type Nafion® ne peuvent travailler qu'à des températures maximales de 90°C. Pour des températures supérieures, les membranes ne peuvent

plus assurer une conductivité convenable des protons à cause de leur inaptitude à retenir l'eau. Leur rendement diminue en fonction de la chute de l'humidité relative conjointe à l'élévation de la température. Or, l'application des piles à combustibles aux véhicules de transport nécessite l'utilisation de membranes pouvant fonctionner de façon satisfaisante à des températures supérieures à 90°C, en particulier à des températures comprises entre 120 et 150°C. Ce type de membranes n'existe pas actuellement sur le marché.

En terme de coût de fabrication enfin : pour permettre le développement massif de cette technologie et la généralisation de ces générateurs de puissance promis à un bel avenir, il subsiste le problème du coût de fabrication de la membrane électrolyte en tant que telle, mais également du coût de fabrication du coeur de pile à combustible (AME) lié à l'utilisation de platine comme catalyseur.

Les inventeurs se sont donc donnés pour but de mettre au point un nouveau précurseur permettant de palier ces différents inconvénients et pouvant notamment être utilisé pour la préparation simple et peu coûteuse de membranes hybrides électrolytes présentant des propriétés améliorées par rapport aux membranes existantes, en particulier en termes de conductivité/performance, de gestion de l'eau, de température d'utilisation et en terme de stabilité thermique et chimique. Ce but est atteint par la mise en oeuvre des composés de formule (I) qui sont définis ci-après et qui constituent à ce titre le premier objet de la présente invention.

La présente invention a par conséquent pour objet les composés de formule (I) suivante :

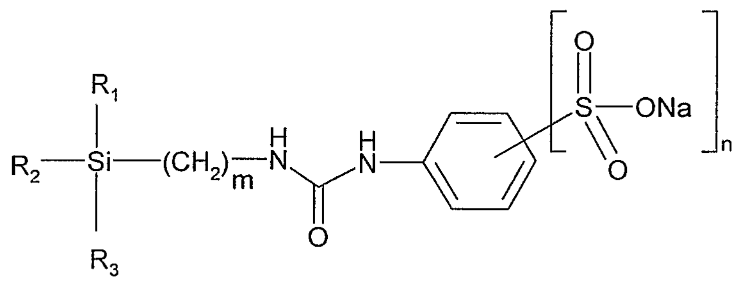

(I)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;
- n est un nombre entier égal à 1 ou 2.

Les composés de formule (I) ci-dessus dans lesquels $R_1$ et $R_3$ représentent un radical éthyloxy sont particulièrement préférés.

Parmi les radicaux mentionnés ci-dessus pour $R_2$, le radical éthyloxy est particulièrement préféré.

Selon une forme de réalisation préférée de l'invention, $R_1 = R_2 = R_3 =$ éthyloxy.

Parmi les valeurs données pour m, on préfère les composés de formule (I) dans lesquels m = 3.

Dans les composés de formule (I) ci-dessus, lorsque n = 1, le groupement sulfonate de sodium occupe la position para du cycle phényle par rapport à l'atome de carbone lié à l'atome d'azote du groupement urée. Lorsque n = 2, les deux groupements sulfonates sont soit chacun en position méta par rapport à l'atome de carbone lié à l'atome d'azote du groupement urée, soit respectivement en position para et méta par rapport à l'atome de carbone lié à l'atome d'azote du groupement urée.

Ces préférences correspondent aux configurations (I-1) à (I-3) suivantes :

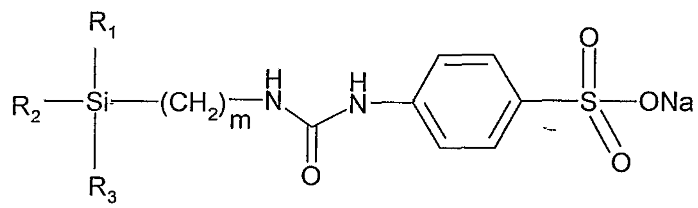

(I-1)

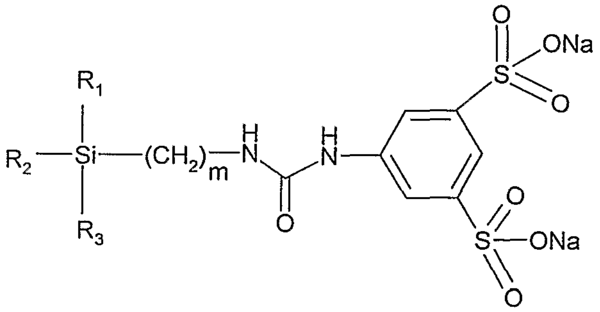

(I-2)

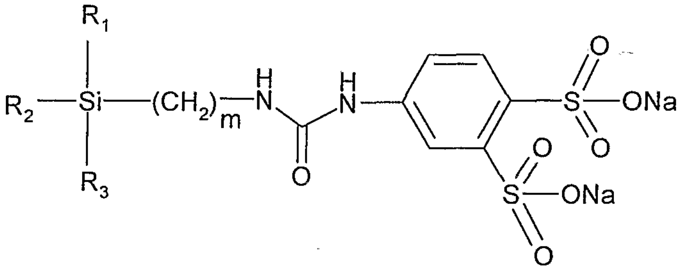

(I-3)

dans lesquelles $R_1$, $R_2$, $R_3$ et m ont les mêmes significations que celles indiquées ci-dessus pour les composés de formule (I).

Parmi ces composés, les composés dans lesquels n = 1, c'est-à-dire les composés de formule (I-1), sont préférés.

Parmi les composés de formule (I) ci-dessus, le 3-(triéthoxysilyl)propyl)-3-(4-sodiumsulfonate)phényl)urée est particulièrement préféré ; ce composé répond à la formule suivante :

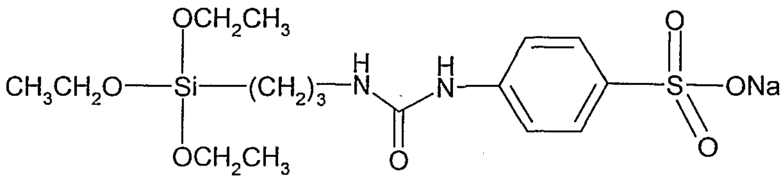

La présente invention a également pour objet le procédé de synthèse des composés de formule (I) ci-dessus. Ce procédé est caractérisé par le fait qu'il comprend les étapes suivantes :

1) la déshydratation totale d'un aminobenzène sulfonate de formule (II) suivante :

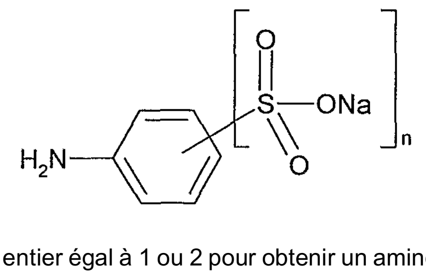

(II)

dans laquelle n est un nombre entier égal à 1 ou 2 pour obtenir un aminobenzène sulfonate anhydre de formule (II),

2) la mise en solution de l'aminobenzène sulfonate anhydre de formule (II) obtenu ci-dessus à l'étape précédente dans un solvant organique anhydre choisi parmi le méthanol, le diméthylformamide (DMF), le N,N-diméthylacétamide et leurs mélanges ; le méthanol anhydre étant particulièrement préféré ;

3) la mise sous vide et sous atmosphère inerte de ladite solution ;

4) l'ajout à ladite solution, en excès et à température ambiante, d'un composé isocyanate anhydre de formule (III) suivante :

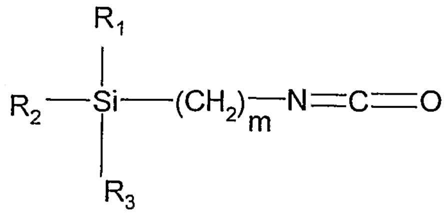 (III)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;

5) la précipitation du composé de formule (I) attendu dans un solvant aprotique ; et
6) le lavage dudit composé de formule (I) dans un solvant aprotique.

L'étape 1) de déshydratation de l'aminobenzène sulfonate de formule (II) peut par exemple être réalisée selon le protocole suivant : 3 cycles successifs à 150°C sur une balance séchante, et 1 heure en cloche sous vide à 60°C.

Lors de l'étape 4), le composé isocyanate de formule (III) est de préférence utilisé en un excès représentant de 1,2 à 1,3 équivalents par rapport à la quantité d'aminobenzène sulfonate de formule (II) mise en oeuvre.

Selon une forme de réalisation préférée de l'invention, à l'issue de l'étape 4), la solution contenant l'aminobenzène sulfonate de formule (II) et le composé isocyanate de formule (III) est portée à une température comprise entre 60 et 80°C inclusivement, pendant une durée allant de préférence de 3 à 12 heures environ, de façon à augmenter le rendement de la réaction.

Le solvant aprotique utilisé lors des étapes 5) et 6) est de préférence choisi parmi l'acétonitrile, l'éther, l'acétone et leurs mélanges. A ce titre, l'utilisation d'un mélange acétonitrile/éther (50/50 : v/v) est particulièrement avantageuse.

Après l'étape de lavage, le composé de formule (I) ainsi obtenu peut être séché et stocké sous dessiccateur, selon des méthodes classiques (boîte à gant sous atmosphère inerte, desséchant $P_2O_5$, gel de silice...).

Les composés de formule (I) décrits ci-dessus peuvent avantageusement être utilisés pour la préparation de membranes polymères électrolytes.

Un autre objet de la présente invention est donc l'utilisation d'au moins un composé de formule (I) telle que définie ci-dessus pour la préparation d'une membrane électrolyte polymère conductrice de protons.

Selon une forme de réalisation préférée de l'invention, l'utilisation du 3-(triéthoxysilyl)propyl)-3-(4-sodiumsulfonate)phényl)urée est, dans ce cas, particulièrement avantageuse.

Le procédé de préparation de ces membranes électrolytes peut être mis en oeuvre de façon classique selon un procédé de polymérisation sol-gel avec une catalyse nucléophile en utilisant un catalyseur nucléophile.

Il comprend, de façon générale, les étapes suivantes :

1) la dissolution d'au moins un composé de formule (I) dans un solvant anhydre (pouvant par exemple être choisi parmi le méthanol, le DMF et le diméthylacétamide),
2) la polymérisation dudit composé de formule (I) par ajout d'un catalyseur nucléophile choisi parmi les amines primaires et les dérivés d'imidazole, en présence d'eau pour obtenir un gel,
3) la mise en forme dudit gel,
4) le séchage dudit gel pour obtenir un matériau solide sous la forme d'un film polymère,
5) l'échange ionique $Na^+/H^+$ par immersion dudit film polymère, dans une solution acide et
6) le rinçage à l'eau dudit film polymère pour éliminer toute trace d'acide.

Selon une forme de réalisation préférée de ce procédé, un précurseur plastifiant peut être ajouté à la solution du ou des composés de formule (I) avant l'initiation de la réaction de polymérisation, de préférence sous agitation vigoureuse.

La présence d'un tel précurseur plastifiant permet d'augmenter l'hydrophobicité, la flexibilité et l'élasticité de la membrane électrolyte.

Lorsqu'il est utilisé, le précurseur plastifiant est de préférence choisi parmi les composés de formule (IV) suivante :

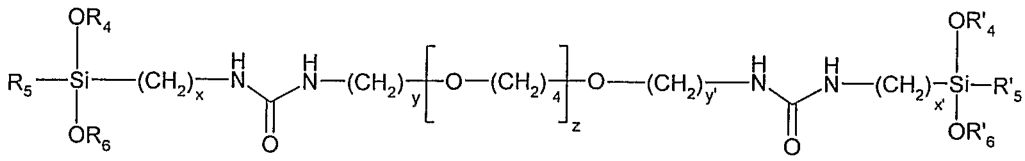

(IV)

dans laquelle :

- $R_4$, $R'_4$, $R_6$ et $R'_6$ sont identiques et représentent un radical méthyle ou éthyle ;
- $R_5$ et $R'_5$, identiques ou différents, représentent un radical méthyle, éthyle, méthyloxy, éthyloxy ou phényle ;
- x et x', et y et y', identiques ou différents, sont des nombres entiers variant de 2 à 6 inclusivement ;
- z est un nombre entier variant de 8 à 16 inclusivement.

Parmi les radicaux mentionnés ci-dessus pour $R_4$, $R'_4$, $R_6$ et $R'_6$, le radical éthyle est particulièrement préféré.

Parmi les radicaux mentionnés ci-dessus pour $R_5$ et $R'_5$, le radical éthyloxy est particulièrement préféré.

Selon une forme de réalisation préférée de l'invention, $R_4 = R'_4 = R_6 = R'_6$ = éthyle.

Parmi les valeurs données pour x, x', y et y', on préfère les composés de formule (IV) dans lesquels x = x' = y = y' = 3.

z est de préférence un nombre entier variant de 12 à 14 inclusivement ; la valeur z = 13 étant tout particulièrement préférée.

Selon une forme de réalisation tout particulièrement préférée, les composés de formule (IV) sont choisis parmi les molécules symétriques par rapport au motif polytétrahydrofurane.

A titre de composé de formule (IV) ci-dessus, on peut citer en particulier le bis-(3-(triéthoxysilyl)propylurée)-3-poly(tétrahydrofurane) dans lequel le nombre (z) de motif tétrahydrofurane = 13.

Lorsqu'un précurseur plastifiant de formule (IV) est utilisé, celui-ci représente de préférence de 10 à 40 % en mole environ, plus particulièrement de 15 à 25 % en mole environ par rapport au nombre de moles de composé de formule (I).

Parmi les catalyseurs nucléophiles utilisables lors de l'étape 2) du procédé, la benzylamine (amine primaire) est particulièrement préférée.

La quantité de catalyseur utilisée varie de préférence de 2 à 3 équivalents par rapport au nombre total de silicium présents dans le milieu réactionnel, la quantité d'eau étant quant à elle comprise entre 4 et 6 équivalents par rapport au nombre total de silicium.

L'étape 2) est de préférence réalisée à température ambiante.

Selon une forme de réalisation préférée de ce procédé, la mise en forme des membranes lors de l'étape 3) est réalisée de façon à ce que leur épaisseur soit comprise entre 100 et 200 $\mu$m environ. Cela permet, lorsque la membrane polymère est ensuite utilisée comme électrolyte au sein d'une pile à combustible, d'augmenter les performances du système en fonctionnement (résistance intrinsèque plus faible).

Si on le souhaite, à l'issue de l'étape 4), la membrane peut être séchée et stockée sous dessiccateur. Dans ce cas la membrane devra être réhydratée progressivement, par exemple par immersions successives dans un milieu hydroalcoolique tel que par exemple un mélange éthanol/eau avant de subir les étapes 5) d'échange ionique et 6) de rinçage nécessaires à son activation et donc à son utilisation.

L'échange ionique de l'étape 5) est de préférence réalisé par immersion de la membrane dans une solution d'acide chlorhydrique de molarité comprise entre 1 et 4 M inclusivement.

Les membranes obtenues en utilisant au moins un composé de formule (I) conforme à l'invention selon le procédé qui vient d'être décrit ci-dessus présentent les avantages suivants :

- elles sont faciles à préparer selon un procédé de synthèse peu coûteux. Elles peuvent facilement être produites en grande quantité sans aucun équipement lourd, et ne nécessitent pas de conditions de sécurité particulières. Par ailleurs, il existe de nombreuses possibilités de mise en forme du gel : coulage ("*tape-casting*", "*spin-coating*"), pressage à chaud, extrudage, etc. De plus, la stratégie de synthèse par auto-assemblage supramoléculaire et polymérisation sol-gel par catalyse nucléophile conduit à l'obtention de films membranaires hautement organisés et cristallins,
- elles présentent d'excellentes propriétés de conductivité, 4 à 8 fois supérieures à celles de la membrane de référence à base de Nafion® qui constitue habituellement les membranes classiquement utilisées dans la fabrication du coeur des piles à combustible. Ceci en fait par conséquent un matériau de choix pour une utilisation à titre de membrane polymère électrolyte conductrice de protons dans les piles à combustible de type PEMFC,

- elles présentent également des propriétés d'homogénéité, de stabilité chimique et thermique remarquables dues à une nanostructuration contrôlée au cours de leur synthèse et à la présence continue d'un squelette/matrice inorganique de silice (Si-O-Si). Les températures de dégradation de ces membranes sont supérieures à 330°C et elles présentent également de bonnes stabilités en environnement hydrolytique et/ou oxydant.

Les membranes conformes à l'invention présentent une architecture fine sous la forme de canaux ioniques hydrophiles de dimensions nanométriques au sein d'une matrice inorganique de silice. Cette architecture particulière des membranes conformes à l'invention est favorable à la rétention d'eau mais également au transport des protons. Cela peut présenter un avantage en termes de gestion de l'eau en augmentant ainsi leur capacité de rétention de l'eau à haute température (assèchement plus lent que d'autres électrolytes).

Enfin, les composés de formule (I) conformes à la présente invention peuvent également être utilisés :

- à titre de charge hybride fonctionnelle dans une structure hôte après polymérisation sol-gel *in situ* (car ils conduisent ainsi à une particule organominérale conductrice). Il existe donc une grosse différence avec une charge minérale basique, sous la forme de nanoparticules d'oxydes non fonctionnelles ($SiO_2$, $TiO_2$, $ZrO_2$, par exemple), qui sont classiquement utilisées pour améliorer juste les propriétés mécaniques, physiques). On peut citer l'exemple d'une incorporation au sein de membranes polymères organiques ou de résines échangeuses d'ions (augmentation de la conductivité, de la capacité d'échange et de la stabilité mécanique car après polymérisation sol-gel *in situ* on obtiendra des nanoparticules à coeur inorganique ($SiO_2$)),
- pour la fabrication par polymérisation sol-gel de nanoparticules hybrides fonctionnelles (coeur inorganique en $SiO_2$ et surface organique hydrophile),
- à titre d'agent fluidifiant (par exemple pour diminuer la viscosité de pâtes concentrées telles que des céramiques ou des barbotines). Cela peut notamment permettre d'améliorer l'écoulement en milieux aqueux pour des solutions concentrées,
- pour la réalisation de revêtements de surface par greffage chimique au travers d'une polymérisation sol-gel (films polymères hybrides). On obtient ainsi des monocouches greffées augmentant l'hydrophilie de surface. Les surfaces concernées par un tel revêtement sont par exemple les "wafers" de silicium et les surfaces d'oxydes,

  - comme agent hygroscopique (adsorption et rétention d'eau),
  - comme agent liant pour de la formulation (ambivalence des fonctions organiques/inorganiques),
  - comme agent structurant (empreinte/patron) permettant d'induire une structure lamellaire dans d'autres matériaux (préférentiellement composés de silice) par transfert de l'auto-organisation propre aux composés de formule (I) conformes à l'invention (auto-assemblage supramoléculaire par interaction hydrogène et regroupement des fonctions $SO_3$-).

Les industries concernées par de telles applications appartiennent à de multiples secteurs d'activité parmi lesquels on peut notamment citer les secteurs du verre, des couches minces, des oxydes métalliques, etc...

Outre les dispositions qui précèdent, l'invention comprend encore d'autres dispositions qui ressortiront de la description qui va suivre, qui se réfère à un exemple de préparation d'un composé de formule (I) conforme à l'invention, à un exemple de préparation d'une membrane polymère électrolyte à base d'un composé de formule (I), ainsi qu'aux figures 1 à 8 annexées dans lesquelles :

- la figure 1 représente le diffractogramme de poudre aux rayons X du 3-(triéthoxysilyl)propyl)-3-(4-sodiumsulfonate)phényl)urée (1) (intensité en unités arbitraires en fonction de l'angle de diffraction (2θ));
- la figure 2 représente la structure cristallographique du composé (**1**) ;
- la figure 3 est une représentation schématique de l'organisation moléculaire du composé (**1**) sous la forme de dimère $(\mathbf{1})_2$ ;
- la figure 4 représente une photographie de microscopie électronique à transmission (figure 4A : grossissement x 80000 ; figure 4B : grossissement x 240000) montrant l'organisation submicronique du précurseur (**1**) à des échelles nanométriques ;
- la figure 5 représente les diffractogrammes aux rayons X de membranes hybrides obtenues avec le composé (**1**), en présence ou non d'un précurseur plastifiant (composé **3**) comparativement à une membrane (ne faisant pas partie de l'invention) obtenue en n'utilisant pas de précurseur **(1)** mais juste le précurseur plastifiant **(3) :** Membrane **A** obtenue avec le composé **(3)** uniquement, Membrane **D** : obtenue avec 40 % en poids de composé **(1)** et 60 % en poids de composé **(3)** et Membrane **H** : obtenue en utilisant uniquement le précurseur **(1)** sans précurseur plastifiant. Sur cette figure, l'intensité (en unités arbitraires) est fonction de l'angle de diffraction (2θ) ;
- la figure 6 est une photographie en microscopie électronique à transmission d'une membrane constituée d'un matériau hybride à base de 100 % de précurseur (1) polymérisé par sol-gel (membrane **H** du Tableau 2 de l'exemple

2 ci-après) à un grossissement x 120000 (figure 6A : image en sous focalisation, figure 6B : image à la focalisation) ;

- la figure 7 représente des photographies de membranes hybrides conformes à l'invention celles-ci ayant été posées sur un support imprimé ; sur cette figure, les photographies (i) et (ii) sont celles de la membrane **D** du tableau 2 de l'exemple 2 décrit ci-après, composée à 40 % en poids de précurseur **(1),** la photographie (iii) est celle de la membrane **F** du Tableau 2 de l'exemple 2 décrit ci-après, composée à 58 % en poids de précurseur **(1)** et la photographie (iv) est celle de la membrane **E** du Tableau 2 de l'exemple 2 décrit ci-après, composée à 48 % en poids de composé **(1)** ;
- la figure 8 montre une photo de la membrane **H** conforme à la présente invention et composée uniquement par le matériau hybride à base du précurseur (1) polymérisé par sol-gel (figure 8A), ainsi qu'une représentation schématique (figure 8B) d'un canal à protons existant au sein de la structure lamellaire d'une telle membrane hybride ;
- la figure 9 représente la capacité d'échange ionique (CEI) des membranes **A** à **H** à température ambiante en fonction du meq du composé (3) par gramme de membrane ;
- la figure 10 représente la conductivité protonique à 25°C et 100% d'humidité relative des membranes **A** à **H** et de la membrane de référence de type Nafion® 117 ;
- la figure 11 représente le taux de gonflement et le nombre d'hydratation des membranes **A** à **H** à température ambiante en fonction du meq du composé **(3)** par gramme de membrane ;
- la figure 12 schématise le mécanisme de formation des membranes hybrides de l'invention :

  a) section d'une membrane hybride selon l'invention,
  b) assemblage schématique des nanodomaines lamellaires,
  c) formation de liaisons proton-canaux de conduction comprenant les groupements conducteurs $-SO_3H-H_2O$ ;

- la figure 13 représente la courbe d'Arrhenius des membranes en immersion mesurée par spectrométrie d'impédance électrochimique.

Il doit être entendu toutefois que ces exemples ne sont donnés qu'à titre purement illustratif de l'invention dont ils ne constituent en aucune manière une quelconque limitation.

**<u>EXEMPLE 1</u> : PRÉPARATION DU 3-(TRIÉTHOXYSILYL)PROPYL)-3-(4-SODIUMSULFONATE)PHÉNYL)URÉE (composé (1))**

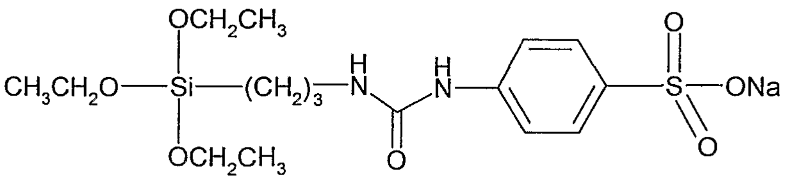

**(1)**

Dans un premier temps, du 4-aminobenzènesulfonate de sodium, 2 $H_2O$ (2) du commerce a été déshydraté selon le protocole suivant : 3 cycles successifs à 150°C sur une balance séchante puis 1 heure en cloche sous vide à 60°C où le produit déshydraté a été conservé jusqu'à son utilisation. Ensuite, 1 g de 4-aminobenzènesulfonate de sodium ainsi déshydraté (6,67 mmol ; 1 éq.) a été introduit dans un ballon contenant 30 ml de méthanol anhydre. La solution a été agitée, soniquée et mise sous vide puis sous atmosphère inerte ($N_2$). 1,65 g de 3-triéthoxysilylpropyl isocyanate anhydre (5,13 mmol ; 1,3 éq.) ont alors été ajoutés à cette solution au goutte à goutte sous agitation continue, puis l'ensemble a été porté au reflux à une température de 80°C durant 5 heures. En fin de réaction, la solution incolore obtenue a été concentrée sous vide puis soumise à précipitation et cristallisation par refroidissement lent jusqu'à une température de 4 °C dans un mélange acétonitrile/éther (50/50 : v/v). Le mélange a ensuite été filtré très rapidement, lavé plusieurs fois par des mélanges acétonitrile/toluène (75/25 : v/v) pour donner une pâte blanche qui a été immédiatement séchée à 60°C sous cloche à vide puis stockée en dessiccateur. Cet exemple a permis d'obtenir le composé (1) pur avec un rendement supérieur à 90 % sous la forme d'une poudre blanche hygroscopique.

$^1$H RMN (300 MHz, DMSO) : $\delta$ (ppm) = 0,55 (t, J = 8,1 Hz, 2H) ; 1,14 (t, J = 6,3 Hz, 9H) ; 1,47 (m, J = 8,35 HZ, 2H) ; 3,04 (q, J = 7,5 Hz, 2H) ; 3,74 (q, J = 8,1 Hz, 6H) ; 6,36 (t, J = 5,4 Hz, 1H) ; 7,34 (d, J = 6,2 Hz, 2H) ; 7,46 (d, J = 6,4 Hz, 2H) ; 8,61 (s, 1H).

$^{13}$C RMN (75 MHz, $CDCl_3$) : $\delta$ (ppm) = 7,4 ; 18,3 ; 23,5 ; 39,6 ; 57,5 ; 116,2 ; 126,5 ; 140,1 ; 141,5 ; 153,8.

Une analyse structurale par diffraction des rayons X de poudre du composé (1) ainsi obtenu a été réalisée à

l'aide d'un diffractomètre de marque PHILIPS, modèle PanAnalytical X'pert Pro I, (mesures en mode Bragg-Brentano, monochromateur secondaire en graphite, détecteur X'celerator, rayonnement Cu). Le diffractogramme obtenu est représenté sur la figure 1 annexée sur laquelle l'intensité (en unités arbitraires) est fonction de l'angle de diffraction (2θ). La structure cristallographique du composé (1) étant quant à elle représentée sur la figure 2 annexée.

Ces résultats permettent de mettre en évidence une forte cristallinité de ce composé. Ces résultats montrent que le composé **(1)** cristallise selon une maille monoclinique, groupe d'espace P2 1/c, ayant un volume moyen de 2194,79 Å$^3$ et les paramètres de maille suivants : $\alpha$= y = 90° ; $\beta$ = 116,4° ; a = 19,499 Å ; b = 5,014 Å et c = 22,449 Å.

Le diffractogramme du composé **(1)** tel que représenté sur la figure 1 présente un pic très intense aux petits angles, correspondant à une distance interplanaire de 3,42 nm et certainement à la formation de dimères $(\mathbf{1})_2$ au niveau moléculaire ainsi que cela est schématisé sur la figure 3 annexée. En effet, on peut considérer que cette distance correspond à la disposition en vis-à-vis de deux molécules voisines dont les fonctions sulfonates se retrouvent à proximité les unes des autres. De plus, l'auto-assemblage par liaisons hydrogène des groupements urée permet d'obtenir un agencement parallèle de la structure moléculaire des précurseurs (1) (superstructures isotopiques orientées).

Des analyses en microscopie électronique à transmission ont permis d'observer une très haute organisation au niveau submicronique (voir figure 4 annexée). En effet, ces clichés sur l'organisation du composé **(1)** à des échelles nanométriques (Figures 4A et 4B) mettent en évidence la formation de canaux moléculaires continus disposés parallèlement les uns par rapport aux autres.

**<u>EXEMPLE 2</u> : PRÉPARATION DE MEMBRANES ÉLECTROLYTE HYBRIDES A BASE DE 3-(TRIÉTHOXYSILYL)PROPYL)-3-(4-SODIUMSULFONATE)PHÉNYL)URÉE ET D'UN PRÉCURSEUR HYBRIDE PLASTIFIANT**

<u>1) Etape préliminaire : Synthèse d'un précurseur hybride plastifiant : le bis-(3-(triéthoxysilyl)propylurée)-3-poly(tétrahydrofurane) (3)</u>

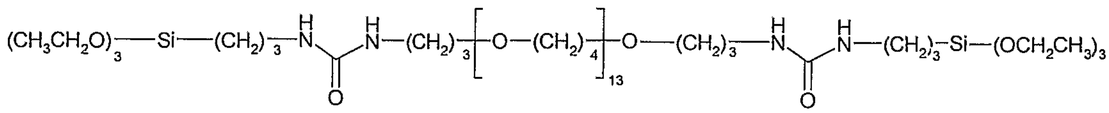

**(3)**

2 g (1 éq. ; 1,82 mmol) de poly(tetrahydrofuran)-bis(3-aminopropyl) vendu par la société Aldrich (référence 436577 ; $M_n$ = 1100 soit 13 motifs tétrahydrofurane) ont été dissous dans 30 ml d'une solution de chloroforme anhydre. La solution a été agitée, soniquée, et mise sous vide puis sous atmosphère inerte ($N_2$). On a ensuite ajouté à cette solution 0,94 g (2,1 éq ; 3,8 mmol) de 3-triéthoxysilylpropylisocyanate au goutte-à-goutte et sous agitation continue, puis l'ensemble a été porté au reflux à 80°C pendant 20 heures. Le mélange réactionnel a alors été évaporé sous vide pendant 4 heures à une température de 80°C pour donner une solution visqueuse translucide. Cette dernière a été lavée plusieurs fois avec 3 x 20 ml d'un mélange acétonitrile/éther (5050 : v/v) et le précurseur hybride plastifiant (3) attendu a été récupéré sous forme d'un gel visqueux après centrifugation et décantation.

$^1$H RMN (300 MHz, DMSO) : $\delta$ (ppm) = 0,51 (t, J = 9,2 Hz) ; 1,11 (t, J = 6,2 Hz) ; 1,36 (m) ; 1,50 (m) ; 1,59 (m) ; 2,95 (q, J = 6,1 Hz) ; 3,02 (q, J = 6,3 Hz) ; 3,15 (s) ; 4,42 (s) ; 3,32 (s) ; 3,74 (q, J = 9,4 Hz) ; 5,73 (t, J = 5,6 Hz) ; 5,81 (t, J = 5,3 Hz).

<u>2) Synthèses de membranes électrolytes polymères</u>

La synthèse des membranes a été réalisée selon un procédé de polymérisation sol-gel avec une catalyse nucléophile en utilisant de la benzylamine comme catalyseur. Le milieu réactionnel est formé par le composé **(1)** préparé ci-dessus à l'exemple 1 à titre de précurseur hybride fonctionnel et le composé **(3)** tel que préparé ci-dessus à l'étape préliminaire, à titre de précurseur hybride plastifiant.

Le composé **(1)** apporte la fonctionnalité (conduction) au système et le composé (3) permet d'ajuster les propriétés physiques du matériau (flexibilité).

Pour ce faire, le composé **(1)** a été dissous dans 5 ml d'une solution de méthanol anhydre, puis sous agitation vigoureuse, on a ajouté goutte-à-goutte, le composé (3). Les quantités de chacun des précurseurs utilisés pour préparer les membranes A à G ci-après sont présentées dans le tableau 1 ci-dessous :

**TABLEAU 1**

| Membrane | Composition de la membrane | | % en moles de composé (1) |
|---|---|---|---|
| | % en poids de composé (1) | % en poids de composé (3) | |
| A (*) | 0 | 100 | 0 |
| B | 20 | 80 | 47,4 |
| C | 30 | 70 | 60,8 |
| D | 40 | 60 | 64,3 |
| E | 48 | 52 | 70,6 |
| F | 58 | 42 | 78,3 |
| G | 78 | 22 | 84,2 |
| H | 100 | 0 | 100 |
| (*) : membrane ne faisant pas partie de la présente invention | | | |

Chacune des solutions a ensuite été homogénéisée par sonication puis agitation pendant 30 min. On a ensuite ajouté 3 éq. de benzylamine (quantité correspondante calculée par rapport au nombre total de groupements triéthoxysilane présents dans le milieu : $nSi(OEt)_3$ total = 1 éq), ainsi que de l'eau (6 éq.) afin d'amorcer les réactions d'hydrolyse. L'ensemble a été agité vigoureusement pendant 45 min. Au final, la viscosité a augmenté progressivement pour conduire à un gel visqueux.

Une membrane **I** contenant 35% en poids de composé **(1)** a également été préparée.

3) Mise en forme des membranes

Chacun des gels ainsi obtenu a ensuite été coulé dans un Pétri circulaire en Téflon®, séché à température ambiante pendant 24 heures puis à l'étuve selon le cycle thermique suivant : 8 heures à 40°C ; 4 heures à 60°C ; 4 heures à 80°C, 2 heures à 100°C et 1 heure à 120°C. Une fois séchées, les membranes ont été démoulées puis refroidies et progressivement réhydratées dans un mélange éthanol/eau (95/5 : v/v). On a ensuite procédé à un échange ionique $Na^+/H^+$ en plongeant les membranes dans une solution d'acide chlorhydrique 1M pendant 24 heures puis en les plongeant plusieurs fois dans des bains d'eau déionisée (3 fois pendant 24 heures) et en les rinçant de manière à éliminer tout excès d'acide jusqu'à obtenir un pH neutre et constant (proche de 7) pour la solution de rinçage.

4) Résultats

Les propriétés électrochimiques et thermiques des membranes A à G ainsi obtenues figurent dans le Tableau 2 ci-après, dans lequel celles d'une membrane de référence de type Nafion® 117 d'une épaisseur de 175 μm ont également été mentionnées à titre comparatif. Ont ainsi été mesurés :

**1) Capacité d'échange ionique (CEI) :** la CEI est une mesure caractéristique, pour une membrane donnée, qui définit le potentiel d'échange d'ions rapporté à la masse. Elle représente ainsi le nombre d'équivalents de sites échangeurs d'ions contenus dans une quantité déterminée de membrane. On l'exprime généralement en milliéquivalent d'ions par gramme (meq /g) de membrane sèche sous forme acide (dans cet exemple le contre-ion est alors un proton $H^+$). Elle a été déterminée pour toutes les membranes par des titrations acido-basique classiques. Expérimentalement, on a équilibré le matériau électrolyte (échangeur d'ions) sous forme acide ($H^+$) dans une solution 1 molaire de chlorure de sodium (NaCl) pendant 24 heures, il y a alors eu libération des protons et remplacement par les cations $Na^+$. On a alors pu doser la solution contenant les protons par une solution basique de type hydroxyde de sodium (NaOH). En utilisant un pH-mètre ainsi qu'un indicateur coloré adapté (tel que par exemple le rouge de phénol), on a pu déterminer précisément l'équivalence. La CEI est exprimée par l'équation suivante :

$$CEI(meq/g) = 1000 \times \frac{C_{NaOH} \times V_{eq}}{M}$$

dans laquelle $C_{NaOH}$ est la concentration de la solution basique soude (en *mol/L), V* (en L) représente le volume de soude nécessaire pour réaliser l'équivalence et M représente la masse (en g) de la membrane sèche.
Au final, cela a permis de caractériser l'accessibilité aux sites échangeurs d'ions ainsi que leur nombre réel (par rapport à une valeur théorique) ;
**2) Taux de gonflement de la membrane** (matériau électrolyte) : il est exprimé en pourcentage et correspond à une expansion volumique lorsqu'elle est équilibrée dans une solution aqueuse (voire organique). Ainsi, les sites échangeurs d'ions et les contre-ions peuvent être solvatés, tandis que les espaces libres résultant de la réticulation et de l'agglomération des chaînes polymériques peuvent se remplir de solvant. Le taux de gonflement, exprimé en pourcentage, se définit par le rapport de la masse de solvant contenu à l'intérieur de la membrane sur la masse sèche de cette dernière. Le taux de gonflement est calculé par l'équation suivante :

$$Tg(\%) = \frac{m_{humide} - m_{sèche}}{m_{sèche}} \times 100$$

dans laquelle $m_{humide}$ est la masse (en g) de la membrane après gonflement dans le solvant et $m_{sèche}$ est la masse (en g) de la membrane avant gonflement dans le solvant.
Expérimentalement, on a déterminé le taux de gonflement par mesure de la prise/perte hydrique. Pour cela, la membrane a été pesée à l'état sec puis, après immersion dans de l'eau déionisée pendant 24 heures et essuyage des faces, et enfin après séchage de la membrane à l'étuve à 100°C pendant 24 heures pour déterminer la quantité d'eau adsorbée. Cette mesure peut également être effectuée en utilisant une balance séchante (marque Mettler, Sartorius...) et en mesurant les variations de masse entre la membrane à l'état hydraté ou sec.
**3) Température de dégradation :** elle a été déterminée graphiquement sur les thermogrammes des membranes réalisés par analyse thermogravimétrique (ATG) et analyse thermique différentielle (ATD). Les mesures ont été effectuées sous azote ($N_2$), avec une température de chauffe de 10°C/min avec des appareils vendus par la société TA Instruments sous les références ATG 2950 Haute Résolution et SDT 2960 Simultanée.
**4) Conductivité :** elle a été déterminée par spectroscopie d'impédance. Il s'agit d'une généralisation de la loi d'Ohm par mesure de l'impédance complexe Z en fonction de la fréquence ($\omega$), d'un matériau soumis à une perturbation sinusoïdale (tension d'entrée) ce qui permet d'accéder à sa résistance électrique R selon l'équation suivante :

$$Z(\omega) = \frac{U(\omega)}{I(\omega)} = |Z| \exp^{(-j\Phi)} = Z'(\omega) + jZ''(\omega) = \mathrm{Re}(Z) + \mathrm{Im}(Z)$$

Les mesures ont été réalisées à une température de 25°C et à 100 % d'humidité relative (HR), avec des impédancemètres de type SOLARTRON® 1260 (analyseur) et 1255 (interface) en utilisant les logiciels Zplot® et Zview®. La plage de fréquence balayée est variable, et généralement comprise entre 0,1 Hz et 10 MHz. On a fait varier l'amplitude du signal sinusoïdal en tension entre 1 et 1000 mV, domaine de linéarité couramment admis pour les conducteurs ioniques. Pour l'étude des propriétés électrochimiques de l'électrolyte, on a utilisé à titre d'électrodes deux phases de mercure liquide avec contact direct, contenues dans une cellule en téflon à deux compartiments entre lesquels la membrane a été maintenue. Des fils de platine plongeant dans le mercure ont été reliés aux appareils de mesure. Le mercure a été renouvelé pour chaque mesure et il a permis notamment d'obtenir de très bons contacts et d'optimiser l'interface entre les deux électrodes et la membrane étudiée.
On a obtenu des représentations graphiques correspondant à des diagrammes de Nyquist (représentation en impédance dans un repère orthonormé). Ces diagrammes d'impédance (non représentés) décrivent, dans la gamme de fréquences étudiée, l'évolution de l'opposé de la partie imaginaire de l'impédance en fonction de la valeur de la partie réelle. La partie réelle Z' de l'impédance (en abscisse) et l'opposé de la partie imaginaire -Z" (en ordonnée) ont été exprimés en Ohms ($\Omega$). Ainsi, on a déterminé graphiquement la valeur de la résistance intrinsèque globale de l'échantillon R ($\Omega$), ce qui correspond à l'extrapolation ou l'intersection de la courbe avec l'axe des abscisses. En corrélant cette dernière avec les facteurs géométriques du matériau, à savoir l'épaisseur (e) et la surface exposée (S), on a pu calculer la conductivité totale exprimée en $S.cm^{-1}$ selon l'équation suivante :

$$\sigma(S.cm^{-1}) = \frac{e(cm)}{R(\Omega) \times S(cm^2)}$$

Les caractérisations et mesures expérimentales sur les membranes A à G conformes à l'invention et sur la

membrane commerciale de type Nafion® 117 ont été réalisées dans les mêmes conditions, avec les mêmes appareils et protocoles opératoires (y compris les étapes d'hydratation, d'échange ionique en présence d'acide, et de rinçage).

Les résultats obtenus figurent dans le Tableau 2 ci-après :

**TABLEAU 2**

| Membrane | Epaisseur ($\mu m$) | $C_1$ (% en poids) | $r_1$ (%) | CEI (meq/g) | Taux de gonflement (%) | Nombre d'hydratation $\lambda$ | Température de dégradation (°C) | Conductivité $\sigma$ ($mS.cm^{-1}$) |
|---|---|---|---|---|---|---|---|---|
| A (*) | 255 | 0 | 0 | 0 | 6 | 0 | 373 | 0,002 |
| B | 212 | 20 | 47,4 | 0,44 | 18 | 22 | 392 | 4,7 |
| C | 239 | 30 | 60,8 | 0,74 | 33 | 24 | 386 | 15,7 |
| D | 187 | 40 | 64,3 | 0,88 | 44 | 28 | 388 | 32 |
| E | 115 | 48 | 70,6 | 0,97 | 52 | 29 | 334 | 48,4 |
| F | 211 | 58 | 78,3 | 1,26 | 61 | 27 | 356 | 98,5 |
| G | 164 | 78 | 84,2 | 1,46 | 68 | 26 | 376 | 160,2 |
| H | - | 100 | 100 | - | - | - | - | - |
| Nafion® 117 | 175 | - | - | 0,85 | 25 | 16 | 395 | 22,4 |

(*) Membrane ne faisant pas partie de l'invention

Les valeurs $C_1$, $r_i$ et λ du tableau 2 représentent :

- $C_1$ est la concentration en composé **(1)**, et elle est calculée grâce à la relation : $C_2$ (% en poids) = 100 - $C_1$,
- $r_1$ est le ratio molaire du composé **(1)**, et
- λ est le nombre d'hydratation : $\lambda = (n_{H2O}/n_{SO3H})$.

La membrane de référence A obtenue à partir du composé **(3)** présente une capacité d'échange ionique (CEI) nulle, et une très faible conductivité protonique pouvant être attribuée au réseau de silice inorganique et à l'absence de groupements fonctionnels.

Les résultats présentés dans le Tableau 2 ci-dessus montrent également que la membrane **D** ne contenant que 40 % en poids de composé **(1)** présente, pour un taux de gonflement 1,75 fois plus grand, une température de dégradation et une capacité d'échange ionique équivalentes, une conductivité plus importante (x 1,45) que celle de la membrane de référence de type Nafion® 117. Les membranes **F** et **G** ayant une composition supérieure en composé de **(1)**, respectivement 58 et 78 % en poids, présentent quant à elles de légères différences en terme de gonflement et de tenue thermique mais d'un autre coté présentent des capacités d'échange ionique bien supérieures et, ce qui est le plus intéressant, des conductivités 4 à 8 fois plus importantes que la membrane de référence de type Nafion® 117.

Des analyses structurales par diffraction des rayons X des membranes **A**, **D** et **H** ainsi obtenues ont ensuite été réalisées à l'aide d'un diffractomètre vendu par la société PHILIPS, modèle PANanalytical X'pert Pro I, (mesures en mode Bragg-Brentano, monochromateur secondaire en graphite, détecteur X'celerator, rayonnement Cu). Ces analyses mettent en évidence une importante organisation des membranes hybrides.

La figure 5 annexée représente les diffractogrammes des membranes **A**, **D** et **H** sur lesquels l'intensité en unités arbitraires est exprimée en fonction de l'angle de diffraction : 2θ.

On observe tout d'abord qu'en l'absence de composé **(1)** conforme à l'invention (membrane **A** ne faisant pas partie de l'invention), le matériau obtenu ne présente aucun pic de diffraction et il est donc amorphe. On remarque également que lorsqu'on augmente la teneur massique en composé **(1)**, des pics de diffraction émergent du diffractogramme (membranes **D** et **H**) : cela se manifeste par des pics discrets très intenses dont le principal (plan de type 001) se situe aux petits angles et correspond à une distance interplanaire centrée sur 3 nm. Les deux autres pics moins intenses sont des pics harmoniques en relation directe avec le premier, et correspondent au plan de type 002 et de type 004, ce qui démontre la présence d'un réseau lamellaire s'organisant en canaux moléculaires d'une largeur moyenne de 3 nm. A cet égard, la figure 6 annexée représente une photographie en microscopie électronique à transmission de la membrane **H** à un grossissement x 120000 (figure 6A : image en sous focalisation, figure 6B : image à la focalisation). Cette figure met en évidence la structuration en canaux parallèles nanométriques (3 nm), au sein de la membrane **H**.

Ainsi, la forte cristallinité du composé **(1)** de départ est transférée au sein du réseau hybride avec la formation de matériaux hautement structurés. Dans le réseau hybride, on retrouve les précurseurs **(1)** polymérisés et figés (formation du squelette/matrice inorganique par liaisons de type Si-O-Si), dont les fonctions sulfoniques sont orientées vers l'intérieur du canal. L'appariement des proches voisins génère une architecture finale entièrement condensée dans laquelle les canaux nanométriques et parallèles permettent de définir un espace préférentiel pour le transport des espèces ioniques et particulièrement pour la conduction des protons ($H^+$).

La figure 7 annexée montre des photographies des membranes hybrides **D** (figures 7i et 7ii), F (figure 7iii) et **E** (figure 7iv), celles-ci ayant été posées sur un support imprimé.

La figure 8 montre une photo de la membrane **H** composée uniquement par le précurseur **(1)** (figure 8A) ainsi qu'une représentation schématique (figure 8B) d'un canal à protons existant au sein de la matrice hybride d'un tel matériau qui révèle alors une structure lamellaire. Pour ce type de structure, composée de plans successifs, on peut définir que le squelette inorganique $(Si\text{-}O\text{-}Si)_n$ forme les murs/parois des canaux de conduction, tandis que l'intérieur des canaux est formé par le regroupement des parties organiques et plus particulièrement des fonctions sulfonates.

On observe sur la figure 9 que la Capacité d'Echange Ionique (CEI) des membranes **B** à **H** mesurées sont très proches des valeurs théoriques calculées à partir des quantités molaires (en $meq.g^{-1}$) du composé **(3)**, ce qui signifie que les protons des groupements sulfonates sont accessibles pendant le titrage et participent au procédé de conduction protonique.

La figure 10 montre que la membrane **D** ne contenant que 40% en poids du composé **(1)** atteint une conductivité protonique supérieure à celle du Nafion® 117 pour une Capacité d'Echange Ionique (CEI) égale et un taux de gonflement plus élevé. La supériorité des conductivités protoniques mesurées pour les membranes **D** à **H** peut être attribuée à l'augmentation du nombre de nanodomaines ayant une concentration élevée en groupements sulfonates (J Power Sources 2006, 154, 115-123).

La figure 11 met en évidence une augmentation linéaire du taux de gonflement des membranes **B** à **H**, pendant que le nombre d'hydratation λ reste constant.

Ces données sont confirmées par la figure 12 qui montre la formation des canaux. Pendant que le taux de gonflement augmente de façon constante avec la Capacité d'Echange Ionique (CEI), une augmentation plus prononcée

de la conductivité avec la Capacité d'Echange Ionique (CEI) est enregistrée pour les membranes **E** à **H** par rapport aux membranes **B** à **D**. Pour les membranes **E** à **H**, la concentration élevée en composé **(1)** allonge la densité et l'orientation des groupements sulfonates, conduisant ainsi à un réseau conducteur hautement concentré de conductivité protonique élevée. La conductivité protonique des membranes PEM (Polymer Electrolyte Membrane) est un paramètre clef qui dépend fortement de la Capacité d'Echange Ionique (CEI) et de la température, et dont l'énergie d'activation Ea donne un aperçu du mécanisme de transport. Un des inconvénients du Nafion® 117 est son application difficile sur des membranes DMFC (Direct Methanol Fuel Cells), la perméabilité du méthanol étant directement liée à la structure du Nafion® 117 dont les domaines de conduction ionique contribuent à la diffusion rapide du méthanol (J. Power Sources, 2008, 175, 256-260).

La membrane **I** présente une conductivité $\sigma$ = 25 $mS.cm^{-1}$ presque égale à la conductivité du Nafion® 117 ($\sigma$ = 22,4 $mS.cm^{-1}$ déterminée expérimentalement). La perméabilité au méthanol de la membrane **I** ($P_M = 4{,}1 \times 10^{-7}$ $cm^2/s$ à 25°C) est réduite de 23% par rapport à la perméabilité au méthanol du Nafion® 117 ($P_M = 18{,}1 \times 10^{-7}$ $cm^2/s$ à 25°C). Idéalement, une membrane DMFC (Direct Methanol Fuel Cells) devrait présenter une haute conductivité protonique et une faible perméabilité au méthanol, la sélectivité de la membrane pour le transport protonique dans le méthanol étant égale à $\beta = \sigma/P_M$. Pour la membrane **I** : $\beta = 61 \times 10^{-6}$ $mS.s.cm^{-1}$, cette sélectivité étant approximativement dix fois supérieure à celle du Nafion® 117. Cette augmentation est due à la diminution de la perméabilité au méthanol, puisque la membrane **I** et le Nafion® 117 présentent la même conductivité protonique.
L'énergie d'activation Ea est déterminée selon la loi d'Arrhenius :

$$\sigma = \sigma_0 \exp(-Ea/RT)$$

où:

- Ea est l'énergie d'activation d'Arrhenius,
- T est la température, et
- R est la constante des gaz parfait (valeur usuelle : R = 8,314 $J.mol^{-1}.K^{-1}$)

Comme le montre la figure 13, les valeurs obtenues sont approximativement :

- pour la membrane **I** : Ea = 17,46 $kJ.mol^{-1}$,
- pour le Nafion® 117 : Ea = 13,32 $kJ.mol^{-1}$.

La valeur de l'énergie d'activation Ea obtenue pour la membrane **I** par rapport à celle du Nafion® 117 suggère la présence d'une superstructure plus compacte pour la membrane **I** dans laquelle les molécules d'eau (et également les molécules de méthanol) sont moins mobiles (par rapport à la structure du Nafion® 117).

## Revendications

1. Composés de formule (I) suivante :

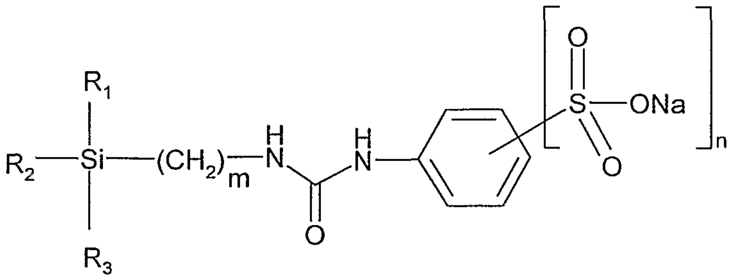

(I)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;

- m est un nombre entier variant de 2 à 6 inclusivement ;
- n est un nombre entier égal à 1 ou 2.

**2.** Composés selon la revendication 1, **caractérisés par le fait que** $R_1$ et $R_3$ représentent un radical éthyloxy.

**3.** Composés selon la revendication 1 ou 2, **caractérisés par le fait que** $R_2$ représente un radical éthyloxy.

**4.** Composés selon l'une quelconque des revendications précédentes, **caractérisés par le fait que** m = 3.

**5.** Composés selon l'une quelconque des revendications précédentes, **caractérisés par le fait que** n = 1 et que le groupement sulfonate de sodium occupe la position para du cycle phényle par rapport à l'atome de carbone lié à l'atome d'azote du groupement urée.

**6.** Composés selon l'une quelconque des revendications 1 à 4, **caractérisés par le fait que** n = 2 et que les deux groupements sulfonates sont soit chacun en position méta par rapport à l'atome de carbone lié à l'atome d'azote du groupement urée, soit respectivement en position para et méta par rapport à l'atome de carbone lié à l'atome d'azote du groupement urée.

**7.** Composés selon l'une quelconque des revendications précédentes, **caractérisés par le fait qu'**ils sont choisis parmi ceux dans lesquels n = 1.

**8.** Composé de formule (I) selon la revendication 1, **caractérisé par le fait qu'**il s'agit du 3-(triéthoxysilyl)propyl)-3-(4-sodiumsulfonate)phényl)urée de formule suivante :

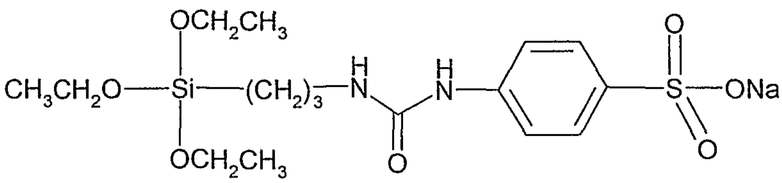

**9.** Procédé de synthèse des composés de formule (I) tels que définis à l'une quelconque des revendications précédentes, **caractérisé par le fait qu'**il comprend les étapes suivantes :

1) la déshydratation totale d'un aminobenzène sulfonate de formule (II) suivante :

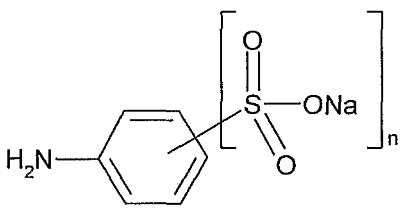

(II)

dans laquelle n est un nombre entier égal à 1 ou 2, pour obtenir un aminobenzène sulfonate anhydre de formule (II),
2) la mise en solution de l'aminobenzène sulfonate anhydre de formule (II) obtenu ci-dessus à l'étape précédente dans un solvant organique anhydre choisi parmi le méthanol, le diméthylformamide, le N,N-diméthylacétamide et leurs mélanges ;
3) la mise sous vide et sous atmosphère inerte de ladite solution ;
4) l'ajout à ladite solution, en excès et à température ambiante, d'un composé isocyanate anhydre de formule (III) suivante :

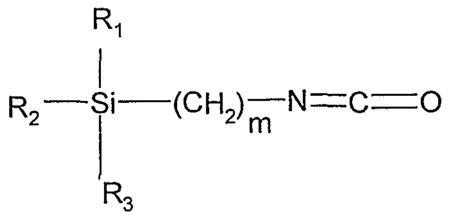

(III)

dans laquelle :

- $R_1$ et $R_3$ sont identiques et représentent un radical méthyloxy ou éthyloxy ;
- $R_2$ représente un radical méthyle, éthyle, méthyloxy, éthyloxy ou phényle ;
- m est un nombre entier variant de 2 à 6 inclusivement ;

5) la précipitation du composé de formule (I) attendu dans un solvant aprotique ; et
6) le lavage dudit composé de formule (I) dans un solvant aprotique.

**10.** Procédé selon la revendication 9, **caractérisé par le fait que** le solvant de l'étape 2) est le méthanol anhydre.

**11.** Procédé selon la revendication 9 ou 10, **caractérisé par le fait que** lors de l'étape 4), le composé isocyanate de formule (III) est utilisé en un excès représentant de 1,2 à 1,3 équivalents par rapport à la quantité d'aminobenzène sulfonate de formule (II) mise en oeuvre.

**12.** Procédé selon l'une quelconque des revendications 9 à 11, **caractérisé par le fait qu'**à l'issue de l'étape 4), la solution contenant l'aminobenzène sulfonate de formule (II) et le composé isocyanate de formule (III) est portée à une température comprise entre 60 et 80°C inclusivement, pendant une durée allant de 3 à 12 heures.

**13.** Procédé selon l'une quelconque des revendications 9 à 12, **caractérisé par le fait que** le solvant aprotique utilisé lors des étapes 5) et 6) est choisi parmi l'acétonitrile, l'éther, l'acétone et leurs mélanges.

**14.** Utilisation d'au moins un composé de formule (I) tel que défini à l'une quelconque des revendications 1 à 8, pour la préparation de membranes polymères électrolytes conductrices de protons.

**15.** Utilisation selon la revendication 14, **caractérisée par le fait que** le composé de formule (I) est le 3-(triéthoxysilyl)propyl)-3-(4-sodiumsulfonate)phényl)urée.

**16.** Utilisation d'au moins un composé de formule (I) tel que défini à l'une quelconque des revendications 1 à 8, à titre de charge hybride fonctionnelle dans une structure hôte après polymérisation sol-gel *in situ* ; pour la fabrication par polymérisation sol-gel de nanoparticules hybrides fonctionnelles ; à titre d'agent fluidifiant ; pour la réalisation de revêtements de surface par greffage chimique au travers d'une polymérisation sol-gel ; comme agent hygroscopique ; comme agent liant ou comme agent structurant.

## Patentansprüche

**1.** Verbindungen der folgenden Formel (I):

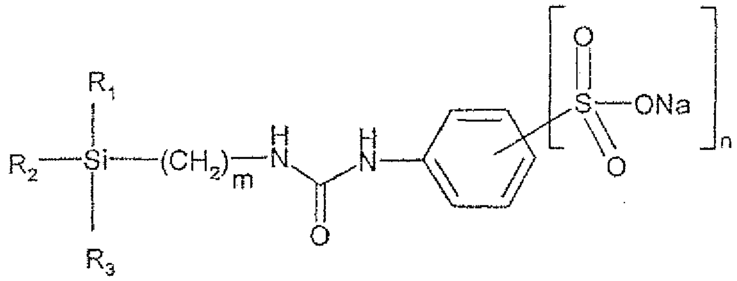

(I)

in der:

- $R_1$ und $R_3$ identisch sind und einen Methyloxy- oder Ethyloxyrest darstellen;
- $R_2$ einen Methyl-, Ethyl-, Methyloxy-, Ethyloxy- oder Phenylrest darstellt;
- m eine ganze Zahl von 2 bis 6, einschließlich, ist;
- n eine ganze Zahl gleich 1 oder 2 ist.

**2.** Verbindungen gemäß Anspruch 1, dadurch **gekenn- zeichnet**, dass $R_1$ und $R_3$ einen Ethyloxyrest darstellen.

**3.** Verbindungen gemäß Anspruch 1 oder 2, **dadurch gekennzeichnet, dass** $R_2$ einen Ethyloxyrest darstellt.

**4.** Verbindungen gemäß einem der vorangehenden Ansprüche, **dadurch gekennzeichnet, dass** m = 3.

**5.** Verbindungen gemäß einem der vorangehenden Ansprüche, **dadurch gekennzeichnet, dass** n = 1 und dass die Natriumsulfonatgruppe die para-Position des Phenylrings bezüglich des Kohlenstoffatoms, das an das Stickstoffatom der Harnstoffgruppe gebunden ist, besetzt.

**6.** Verbindungen gemäß einem der Ansprüche 1 bis 4, **dadurch gekennzeichnet, dass** n = 2 und dass die zwei Sulfonatgruppen jeweils in meta-Position bezüglich des Kohlenstoffatoms, das an das Stickstoffatom der Harnstoffgruppe gebunden ist, sind oder in para- und meta-Position bezüglich des Kohlenstoffatoms, das an das Stickstoffatom der Harnstoffgruppe gebunden ist, sind.

**7.** Verbindungen gemäß einem der vorangehenden Ansprüche, **dadurch gekennzeichnet, dass** sie unter denen ausgewählt sind, in denen n = 1.

**8.** Verbindung der Formel (I) gemäß Anspruch 1, **dadurch gekennzeichnet , dass** es sich um 3-(Triethoxysilyl)propyl)-3-(4-natriumsulfonat)phenyl)harnstoff der folgenden Formel handelt:

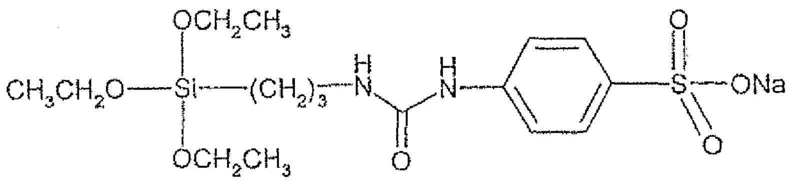

**9.** Verfahren zur Synthese der Verbindungen der Formel (I), wie sie in einem der vorangehenden Ansprüche definiert sind, **dadurch gekennzeichnet, dass** es die folgenden Stufen umfasst:

1) vollständige Dehydratisierung eines Aminobenzolsulfonats der folgenden Formel (II):

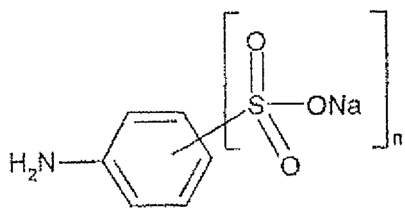

(II)

in der n eine ganze Zahl gleich 1 oder 2 ist, um ein wasserfreies Aminobenzolsulfonat der Formel (II) zu erhalten,
2) in Lösung Bringen des wasserfreien Aminobenzolsulfonats der Formel (II), das oben in der vorherigen Stufe erhalten wurde, in einem wasserfreien organischen Lösungsmittel, ausgewählt aus Methanol, Dimethylformamid, N,N-Dimethylacetamid und deren Gemischen;
3) Bringen der genannten Lösung unter Vakuum und unter inerte Atmosphäre;
4) Zugeben zu der Lösung, in Überschuss und bei Umgebungstemperatur, einer wasserfreien Isocyanatverbindung der folgenden Formel (III):

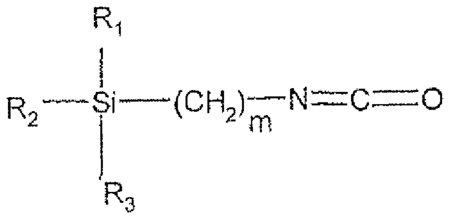

(III)

in der:

- $R_1$ und $R_3$ identisch sind und einen Methyloxy- oder Ethyloxyrest darstellen;
- $R_2$ einen Methyl-, Ethyl-, Methyloxy-, Ethyloxy- oder Phenylrest darstellt;
- m eine ganze Zahl von 2 bis 6, einschließlich, ist;

5) Präzipitation der erwarteten Verbindung der Formel (I) in einem aprotischen Lösungsmittel und
6) Waschen der Verbindung der Formel (I) in einem aprotischen Lösungsmittel.

**10.** Verfahren gemäß Anspruch 9, dadurch **gekennzeich**n e t , dass das Lösungsmittel der Stufe 2) wasserfreies Methanol ist.

**11.** Verfahren gemäß Anspruch 9 oder 10, **dadurch gekennzeichnet, dass** während der Stufe 4) die Isocyanatverbindung der Formel (III) in einem Überschuss verwendet wird, der 1,2 bis 1,3 Äquivalente bezüglich der Menge an Aminobenzolsulfonat der Formel (II), die verwendet wird, darstellt.

**12.** Verfahren gemäß einem der Ansprüche 9 bis 11, **dadurch gekennzeichnet, dass** die Lösung, die das Aminobenzolsulfonat der Formel (II) und die Isocyanatverbindung der Formel (III) enthält, nach Stufe 4) auf eine Temperatur zwischen 60 und 80°C, einschließlich, während eines Zeitraums von 3 bis 12 Stunden gebracht wird.

**13.** Verfahren gemäß einem der Ansprüche 9 bis 12, **dadurch gekennzeichnet, dass** das aprotische Lösungsmittel, das während der Stufen 5) und 6) verwendet wird, aus Acetonitril, Ether, Aceton und ihren Gemischen ausgewählt wird.

**14.** Verwendung wenigstens einer Verbindung der Formel (I), wie sie in einem der Ansprüche 1 bis 8 definiert ist, zur Herstellung von protonenleitenden Elektrolyt-Polymermembranen.

**15.** Verwendung gemäß Anspruch 14, **dadurch gekennzeichnet, dass** die Verbindung der Formel (I) 3-(Triethoxysilyl)propyl)-3-(4-natriumsulfonat)phenyl)harnstoff ist.

**16.** Verwendung wenigstens einer Verbindung der Formel (I), wie sie in einem der Ansprüche 1 bis 8 definiert ist, als funktionelle Hybridbeladung in einer Wirtsstruktur nach Sol-Gel-Polymerisation in situ; für die Herstellung funktioneller Hybrid-Nanopartikel durch Sol-Gel-Polymerisation; als Fluidisierungsmittel; zur Verwirklichung von Oberflächenüberzügen durch chemische Pfropfung durch eine Sol-Gel-Polymerisation; als hygroskopisches Mittel; als Bindemittel oder als Strukturierungsmittel.

**Claims**

**1.** Compounds of formula (I) below:

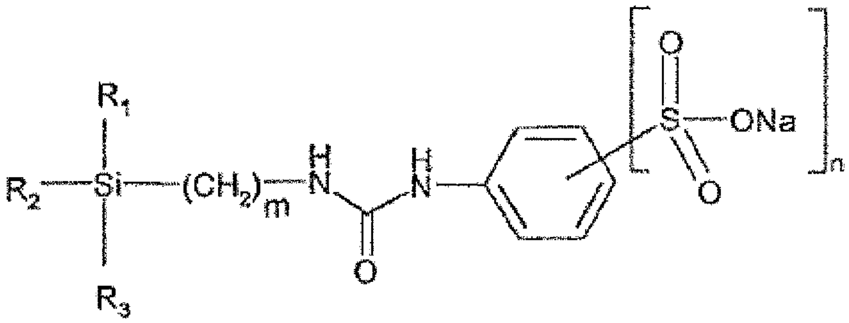

(I)

in which:

- $R_1$ and $R_3$ are the same and represent a methyloxy or ethyloxy radical;
- $R_2$ represents a methyl, ethyl, methyloxy, ethyloxy or phenyl radical;
- m is a whole number from 2 to 6 inclusive;
- n is a whole number equal to 1 or 2.

2. Compounds according to claim 1, **characterised in that** $R_1$ and $R_3$ represent an ethyloxy radical.

3. Compounds according to claim 1 or 2, **characterised in that** $R_2$ represents an ethyloxy radical.

4. Compounds according to any one of the preceding claims, **characterised in that** m = 3.

5. Compounds according to any one of the preceding claims, **characterised in that** n = 1 and that the sodium sulfonate group occupies the para position in the benzene ring in relation to the carbon atom bound to the nitrogen atom of the urea group.

6. Compounds according to any one of claims 1 to 4, **characterised in that** n = 2 and that the two sulfonate groups are either each in the meta position in relation to the carbon atom bound to the nitrogen atom of the urea group or in the para and meta positions respectively in relation to the carbon atom bound to the nitrogen atom of the urea group.

7. Compounds according to any one of the preceding claims, **characterised in that** they are selected from those in which n = 1.

8. Compound of formula (I) according to claim 1, **characterised in that** it comprises 3-(triethoxysilyl) propyl)-3-(4-sodiumsulfonate)phenyl) urea having the following formula:

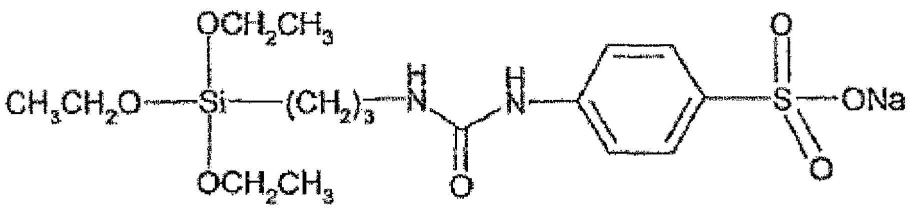

9. A process for the synthesis of compounds of formula (I) as defined by any nne of the preceding claims, **characterised in that** it comprises the following stages:

1) total dehydration of an aminobenzene sulfonate of formula (II) below:

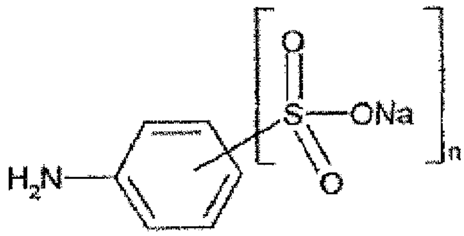

(II)

in which n is a whole number equal to 1 or 2, in order to obtain an anhydrous aminobenzene sulfonate of formula (II),
2) dissolution of the anhydrous aminobenzene sulfonate of formula (II) obtained above in the preceding stage in an anhydrous organic solvent selected from methanol, dimethylformamide, N,N-dimethylacetamide and their mixtures;
3) placing the said solution under vacuum and under an inert atmosphere;
4) adding an anhydrous isocyanate compound of formula (III) below:

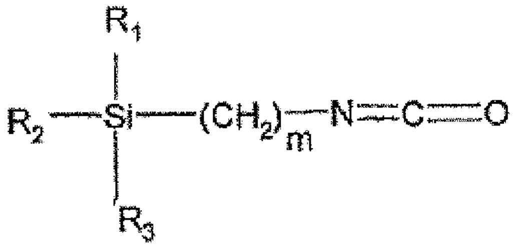

(III)

in which:

- $R_1$ and $R_3$ are the same and represent a methyloxy or ethyloxy radical;
- $R_2$ represents a methyl, ethyl, methyloxy, ethyloxy or phenyl radical;
- m is a whole number from 2 to 6 inclusive;

to the said solution, in excess and at ambient temperature
5) precipitation of the expected compound of formula (I) in an aprotic solvent; and
6) washing the said compound of formula (I) in an aprotic solvent.

**10.** A process according to claim 9, **characterised in that** the solvent in stage 2) is anhydrous methanol.

**11.** A process according to claim 9 or 10, **characterised in that** in the course of stage 4) the isocyanate compound of formula (III) is used in an excess representing 1.2 to 1.3 equivalents in relation to the quantity of aminobenzene sulfonate of formula (II) used.

**12.** A process according to any one of claims 9 to 11, **characterised in that** on completion of stage 4) the solution containing aminobenzene sulfonate of formula (II) and the isocyanate compound of formula (III) is raised to a temperature of between 60 and 80°C inclusive for a period of between 3 and 12 hours.

**13.** A process according to any one of claims 9 to 12, **characterised in that** the aprotic solvent used in stages 5) and 6) is selected from acetonitrile, ether, acetone and their mixtures.

**14.** Use of at least one compound of formula (I) as defined in any one of claims 1 to 8 to prepare proton-conducting electrolyte polymer membranes.

**15.** Use according to claim 14, **characterised in that** the compound of formula (I) is 3-(triethoxy silyl)propyly-3-(4-sodiumsulfonate)phenyl)urea.

**16.** Use of at least one compound of formula (I) as defined in any one of claims 1 to 8 as a functional hybrid charge in a host structure after in situ sol-gel polymerisation; for the manufacture of functional hybrid nanoparticles by sol-gel

polymerisation; as a fluidising agent; for the production of surface coatings by chemical grafting via sol-gel polymerisation; as a hygroscopic agent; as a binding agent or structuring agent.

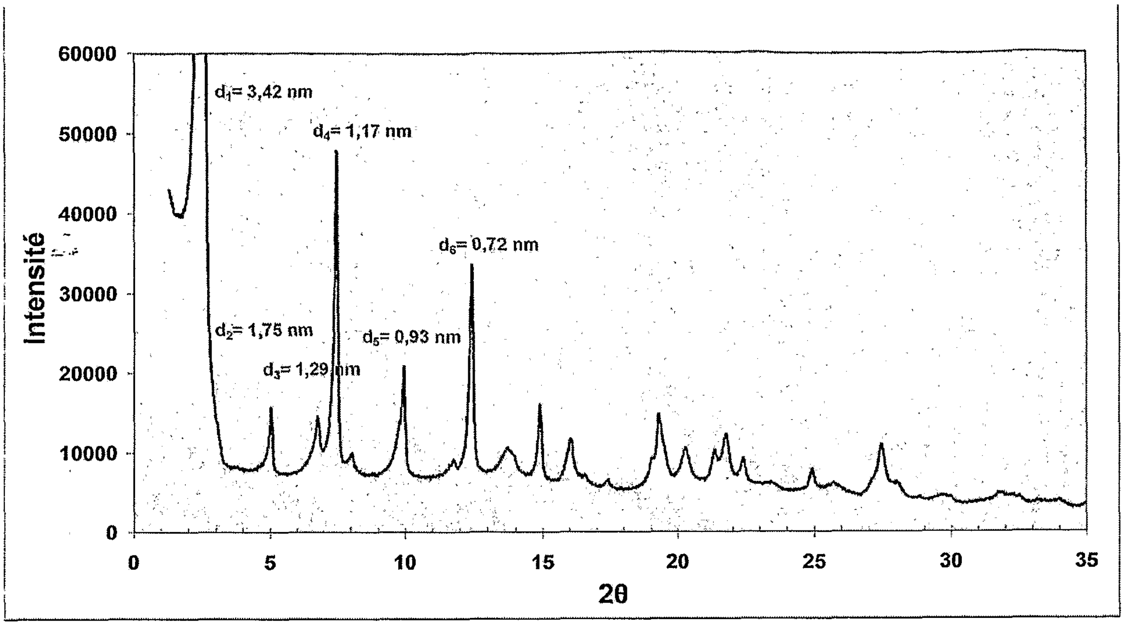


FIGURE 1

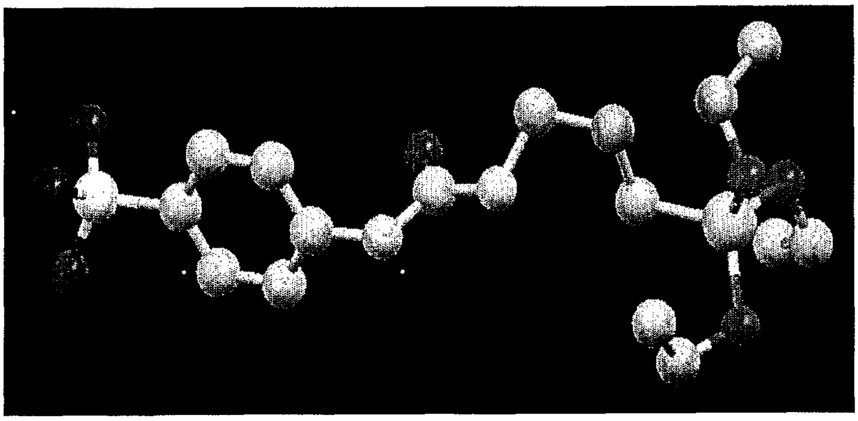

FIGURE 2

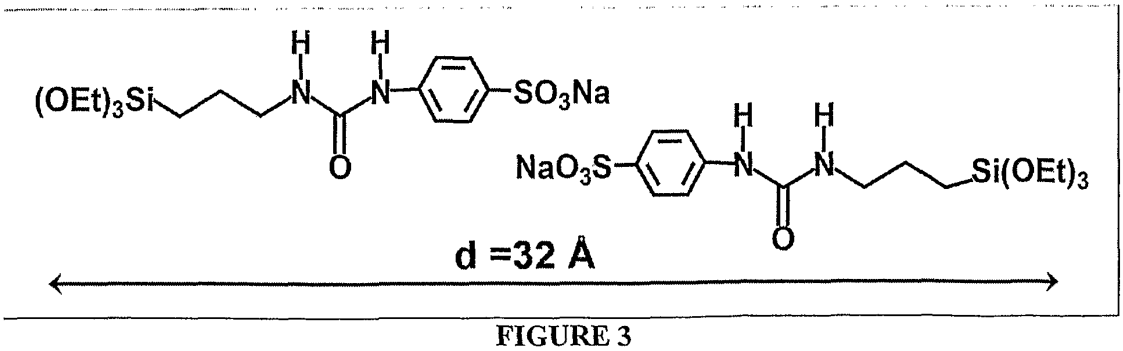

d =32 Å

FIGURE 3

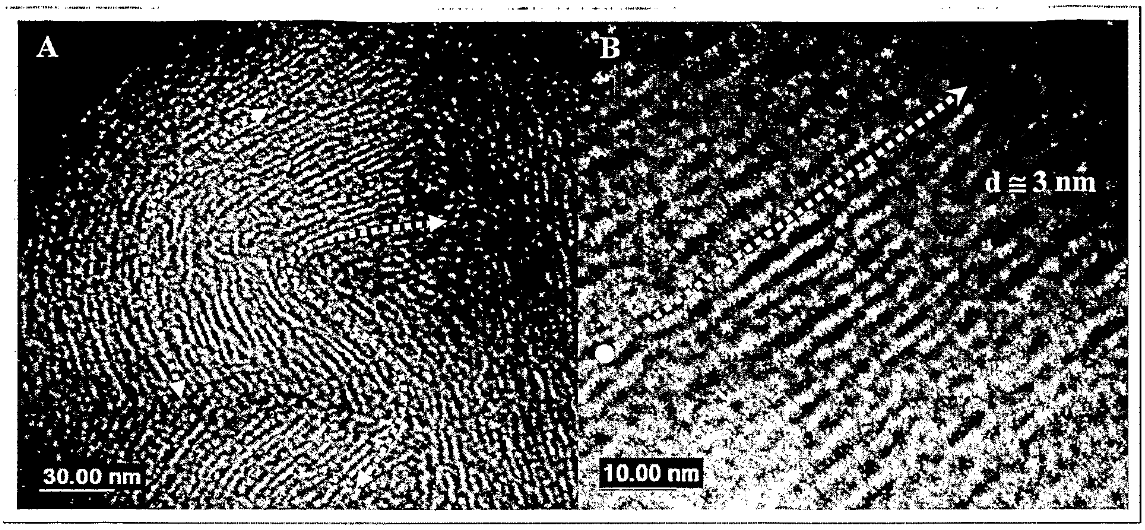


FIGURE 4

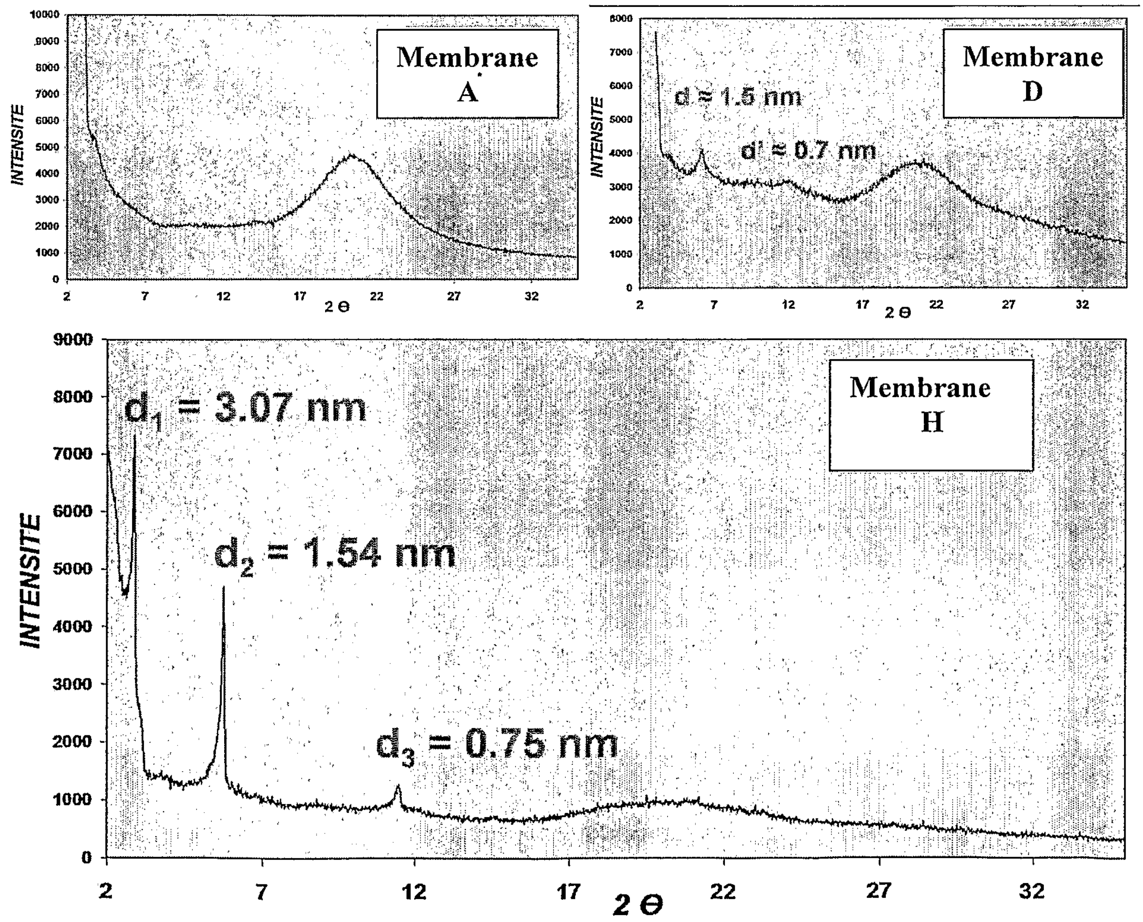


FIGURE 5

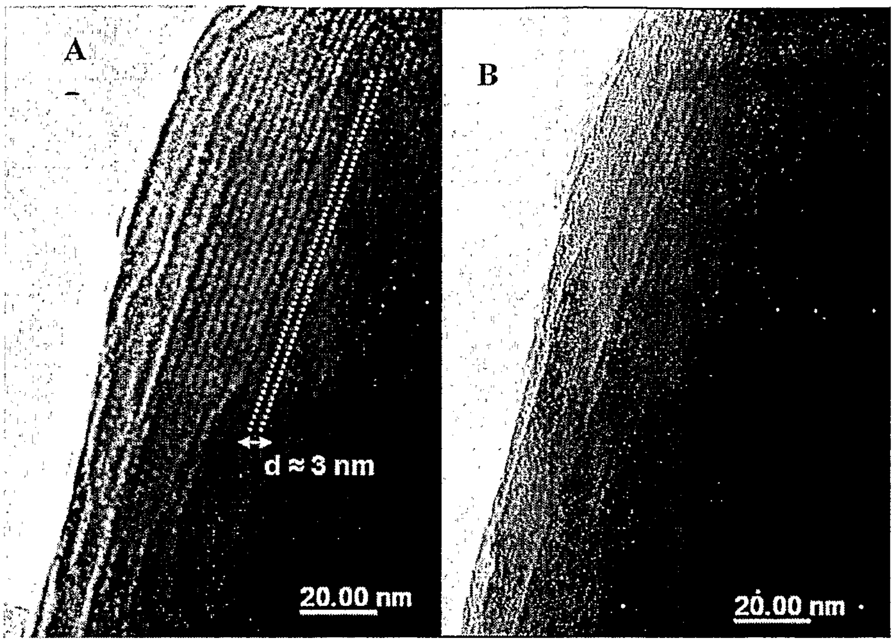


FIGURE 6

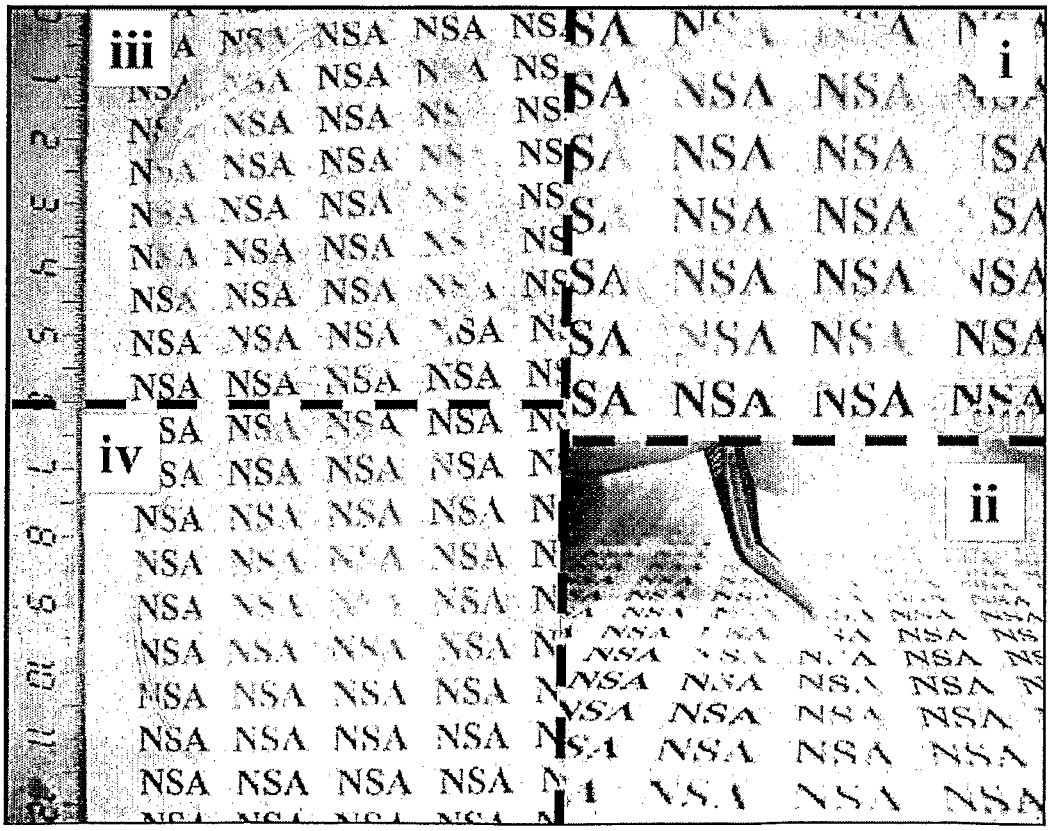


FIGURE 7

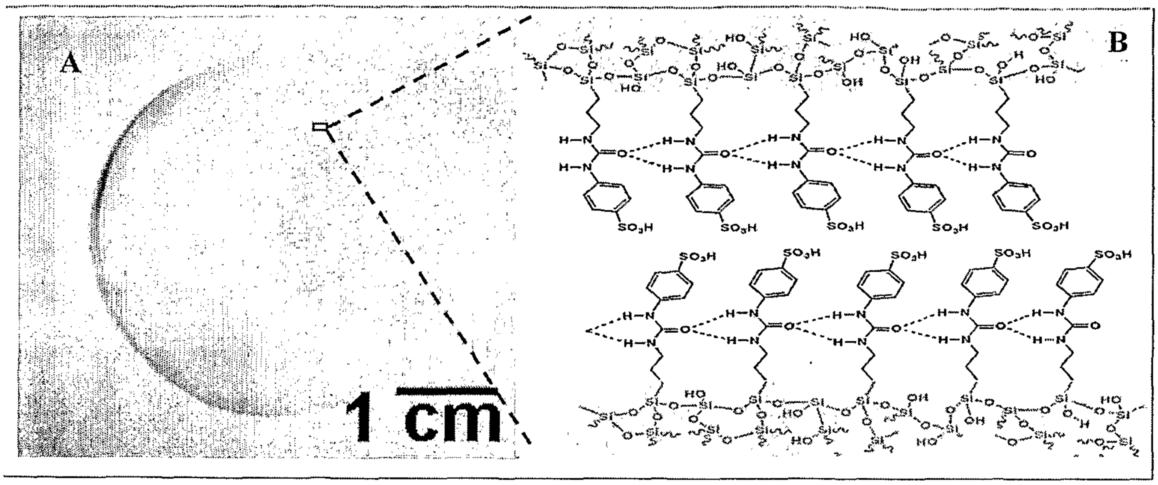


FIGURE 8

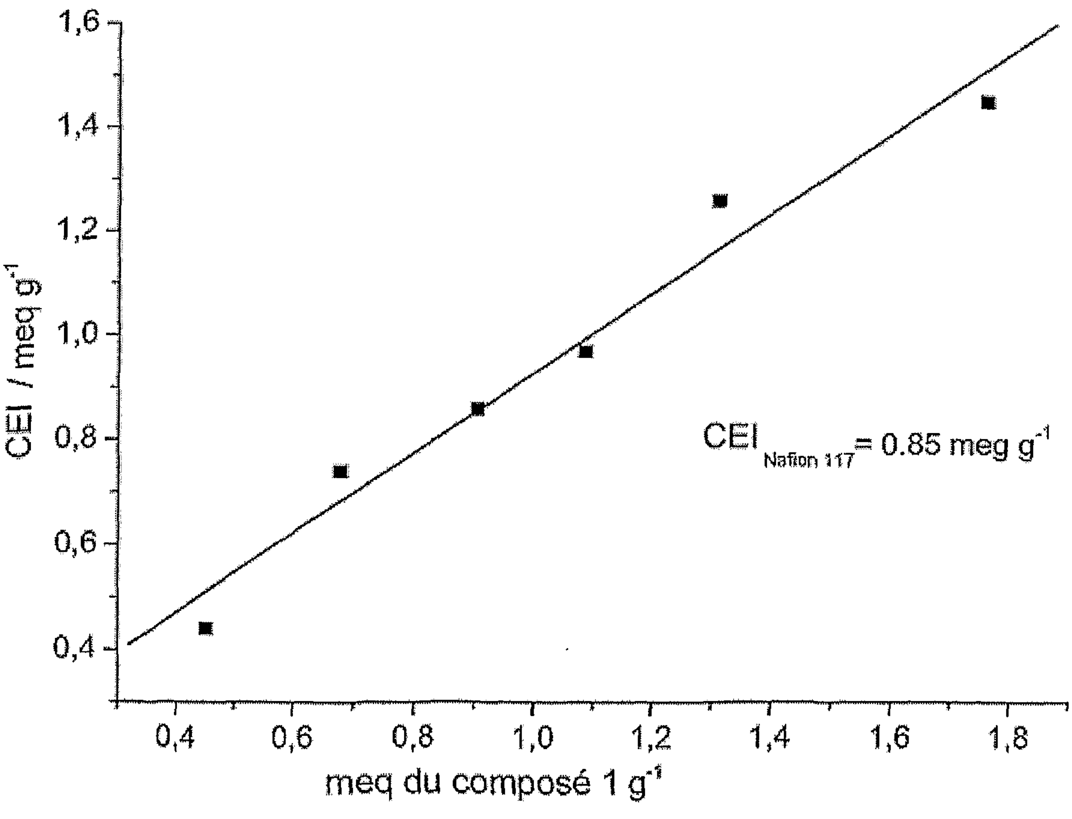


FIGURE 9

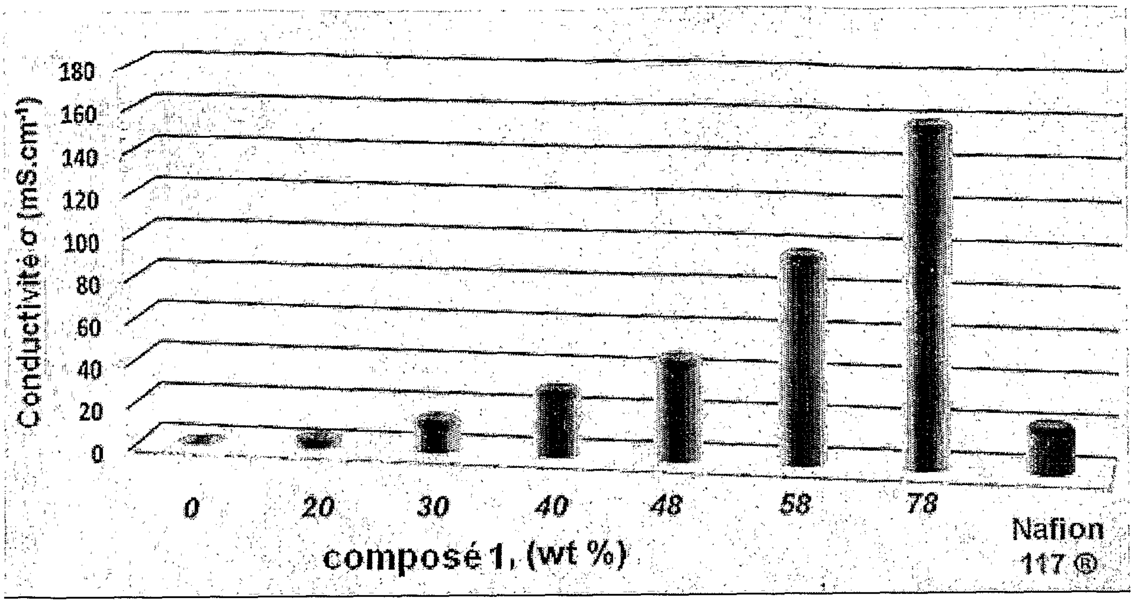


FIGURE 10

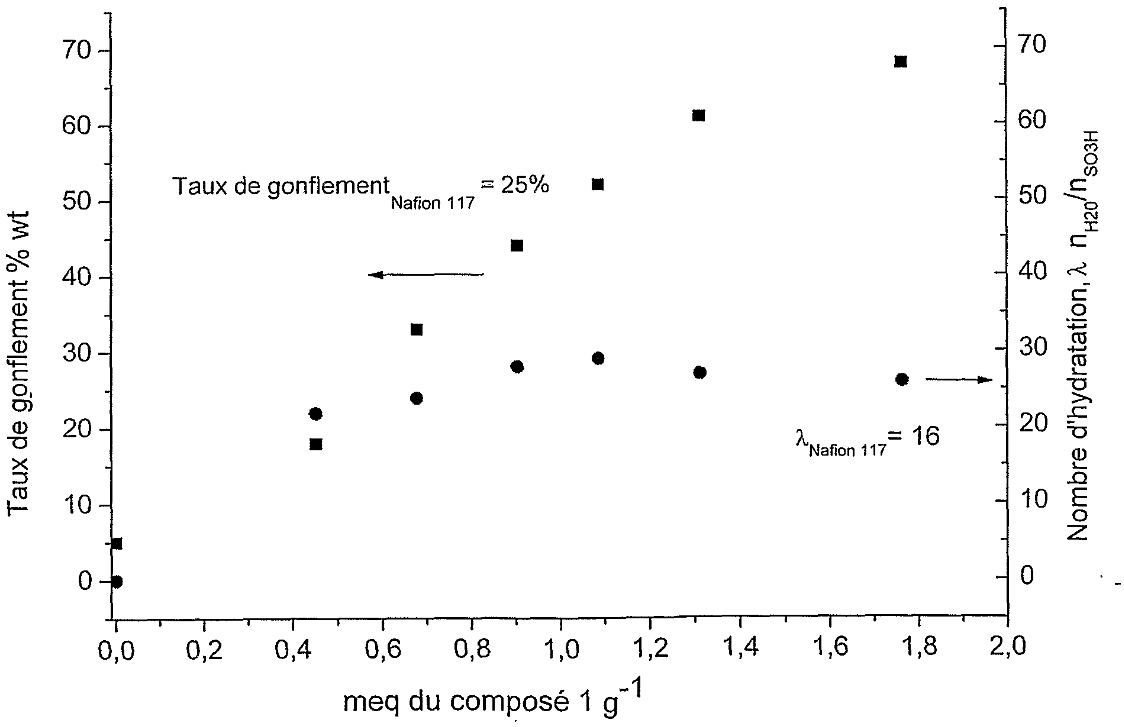


FIGURE 11

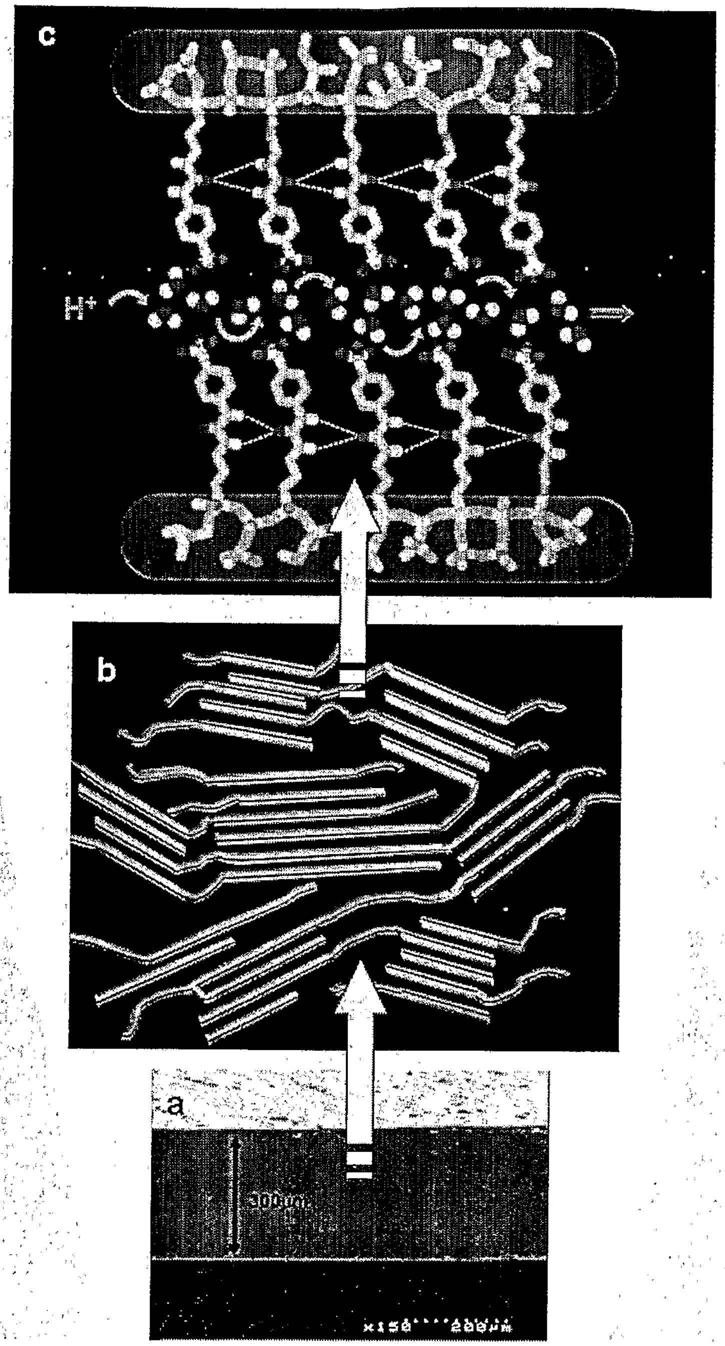


FIGURE 12

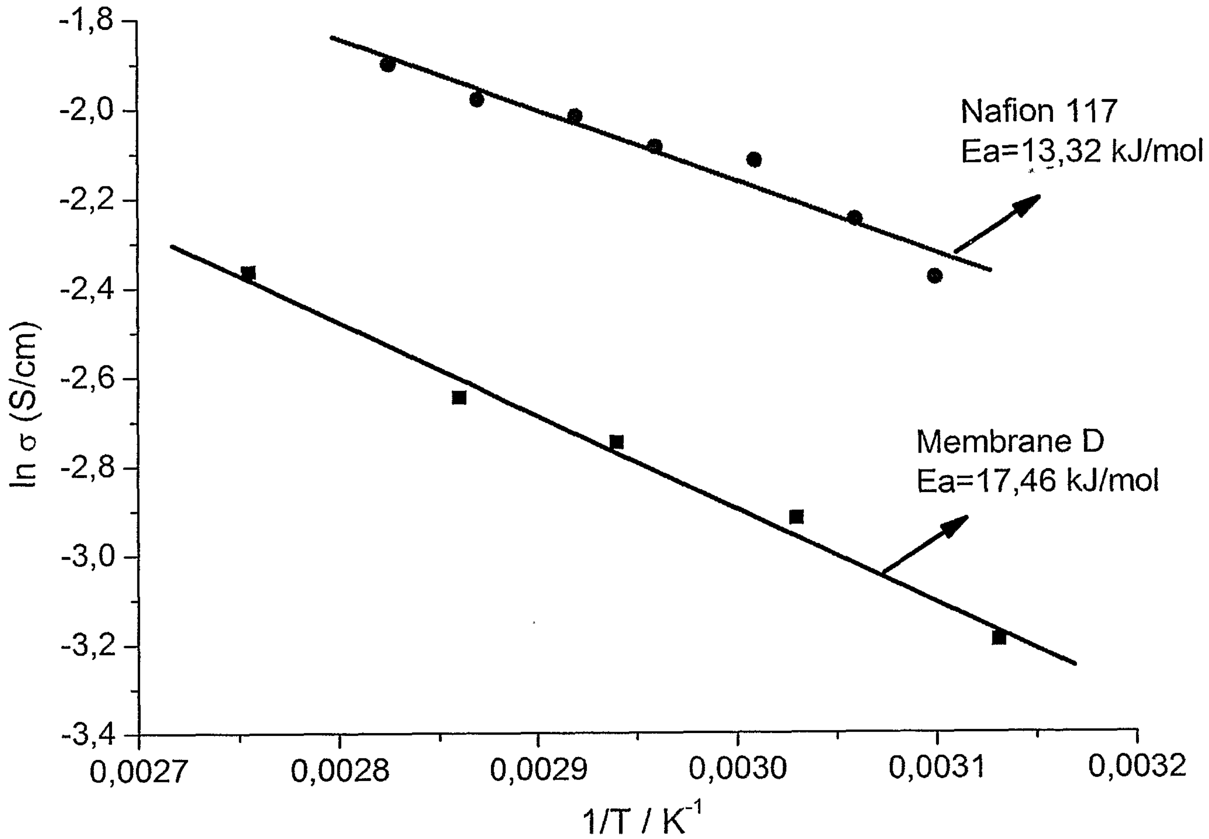
-1,8
-2,0
-2,2
-2,4
-2,6
-2,8
-3,0
-3,2
-3,4
ln σ (S/cm)
0,0027
0,0028
0,0029
0,0030
0,0031
0,0032
1/T / K-1
Nafion 117
Ea=13,32 kJ/mol
Membrane D
Ea=17,46 kJ/mol

FIGURE 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20050164063 A


### Littérature non-brevet citée dans la description


- **MAURITZ K. A. et al.** *Chem Rev.,* 2004, vol. 104, 4535-4585
- *J. Organomet. Chem.,* 2002, vol. 641, 165-172
- *Chem. Mater.,* 1998, vol. 10, 1642-1646
- *J Power Sources,* 2006, vol. 154, 115-123
- *J. Power Sources,* 2008, vol. 175, 256-260